# EUROPEAN PATENT APPLICATION

(11) **EP 4 576 130 A1**
(43) Date of publication of application: **25.06.2025**
(21) Application number: 23854863.0
(22) Date of filing: 10.08.2023
(51) Int. Cl.: H01F 1/147, B22F 1/00, B22F 1/16, B22F 1/17, C01G 49/00, C22C 33/02, C22C 38/00, H01F 1/20, H01F 1/24, H01F 1/26, H01F 41/02

(54) **ALPHA-FE-CONTAINING RARE EARTH ELEMENT-IRON-NITROGEN MAGNETIC POWDER, MANUFACTURING METHOD FOR SAME, MAGNETIC MATERIAL FOR MAGNETIC FIELD AMPLIFICATION, AND MAGNETIC MATERIAL FOR ULTRA-HIGH FREQUENCY ABSORPTION**

(30) Priority: 19.08.2022 JP 2022131185; 14.11.2022 JP 2022182026; 14.04.2023 JP 2023066562
(71) Applicant: NICHIA CORPORATION, Tokushima 774-8601 (JP)
(72) Inventor: AKAMATSU, Jun, Anan-shi, Tokushima 774-8601 (JP); ABE, Satoshi, Anan-shi, Tokushima 774-8601 (JP); IMAOKA, Nobuyoshi, Anan-shi, Tokushima 774-8601 (JP); ABE, Masahiro, Anan-shi, Tokushima 774-8601 (JP)
(74) Representative: Vossius & Partner Patentanwälte Rechtsanwälte mbB
(86) International application number: PCT/JP2023/029295
(87) International publication number: WO 2024/038829

(57) **Abstract**

Provided is a magnetic powder having good high-frequency characteristics with low iron loss and good efficiency even at high frequencies. The present disclosure relates to an α-Fe-containing rare earth-iron-nitrogen-based magnetic powder, including: a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and an α-Fe-containing region outside the core region, the α-Fe-containing region containing α-Fe and at least one selected from the group consisting of oxides, nitrides, and oxynitrides of the rare earth R.

## Description

### TECHNICAL FIELD

The present disclosure relates to an α-Fe-containing rare earth-iron-nitrogen-based magnetic powder, a production method thereof, a magnetic material for magnetic field amplification, and a magnetic material for hyper-high frequency absorption.

### BACKGROUND ART

In recent years, as devices have become more compact and multifunctional and computing speeds have increased, the driving frequency has been increasing, and the use of high or hyper-high frequency-based devices has steadily grown. In particular, the progress of power devices used in the high frequency range of at least 1 MHz but lower than 1 GHz has been attracting attention. For example, the market for GaN electronic devices as devices for high-frequency, high-output wireless applications or for power electronics is expected to significantly grow in the future. Higher-frequency GaN circuits for power electronics require not only higher-frequency GaN devices but also higher-frequency passive components. For example, GaN contactless power transfer uses a frequency of higher than 10 MHz and needs coils including magnetic core materials that can follow high frequencies. At present, however, due to the lack of magnetic core materials with good high-frequency characteristics, air-core coils have to be used, which disadvantageously increase the overall circuit size, even if devices can be downsized by using GaN for higher frequency applications.

The progress of information infrastructures in the hyper-high frequency range of 1 GHz to 1 THz has also been attracting attention. There are various needs for materials with high-frequency characteristics which can absorb signals in the frequency range of at least 1 GHz but lower than 10 GHz for 5G, of at least 10 GHz but lower than 100 GHz for 5G+, or of 100 GHz to 1 THz for 6G, and their harmonics and other spurious signals. These needs have recently been increasing. Particularly, no material currently exists that can absorb a wide range of hyper-high frequencies of 1 GHz or more or even 10 GHz or more, and there are great expectations for the development of very broad frequency band hyper-high frequency absorbing materials which can be widely used in the frequency range of 1 GHz to 1 THz. Examples of high frequency magnetic materials known to date include a rare earth-iron-nitrogen-based magnetic material in which a powder surface is coated with a ferrite-based magnetic material (Patent Literature 1).

### CITATION LIST

### - Patent Literature

Patent Literature 1: WO 2008/136391

### SUMMARY OF INVENTION

### - Technical Problem

However, disadvantageously, the material disclosed in Patent Literature 1 is not efficient enough to be applied to materials for magnetic field amplification in the frequency range of 1 MHz to 1 THz described above. Also, the material does not have high-frequency characteristics which can meet the needs of very broad frequency band absorbing materials in the hyper-high frequency range.

The present disclosure aims to provide a magnetic powder having good high-frequency characteristics with low iron loss and good efficiency even at high frequencies, and a method of producing the magnetic powder.

### - Solution to Problem

An α-Fe-containing rare earth-iron-nitrogen-based magnetic powder according to an aspect of the present disclosure includes: a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and an α-Fe-containing region outside the core region, the α-Fe-containing region containing α-Fe and at least one selected from the group consisting of oxides, nitrides, and oxynitrides of the rare earth R.

Further, an α-Fe-containing rare earth-iron-nitrogen-based magnetic powder according to an aspect of the present disclosure includes: a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and an α-Fe-containing region outside the core region, the α-Fe-containing region having a sea-island structure including a sea region and an island region in which the island region has a higher atomic concentration (%) of Fe, a lower atomic concentration (%) of the rare earth R, and a lower atomic concentration (%) of O than the sea region.

Further, a method of producing an α-Fe-containing rare earth-iron-nitrogen-based magnetic powder according to an aspect of the present disclosure includes: performing a phosphorus treatment including adding an inorganic acid to a slurry containing: a rare earth-iron-nitrogen-based magnetic powder containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; water; and a phosphorus-containing substance, to form a phosphorus compound coating portion on the rare earth-iron-nitrogen-based magnetic powder to obtain a rare earth-iron-nitrogen-based magnetic powder having the phosphorus compound coating portion; and performing an oxidation including heat-treating the rare earth-iron-nitrogen-based magnetic powder having the phosphorus compound coating portion at a temperature of at least 350°C but not higher than 600°C in an oxygen-containing atmosphere.

### - Advantageous Effects of Invention

The present disclosure can provide a magnetic powder having good high-frequency characteristics with low iron loss and good efficiency even at high frequencies, and a method of producing the magnetic powder.

### BRIEF DESCRIPTION OF DRAWINGS

FIG. 1 shows XRD analysis results of magnetic powders prepared in Examples 1 to 4 and Comparative Examples 1 to 3.
FIG. 2A shows STEM and STEM-EDX images of a cross-section near the surface of the magnetic powder prepared in Comparative Example 1.
FIG. 2B shows results of line analysis of a cross-section near the surface of the magnetic powder prepared in Comparative Example 1.
FIG. 3A show STEM and STEM-EDX images of a cross-section near the surface of the magnetic powder prepared in Example 1.
FIG. 3B shows results of line analysis of a cross-section near the surface of the magnetic powder prepared in Example 1.
FIG. 4A shows STEM and STEM-EDX images of a cross-section near the surface of the magnetic powder prepared in Example 2.
FIG. 4B shows results of line analysis of a cross-section near the surface of the magnetic powder prepared in Example 2.
FIG. 5A shows a STEM image of the entire α-Fe-containing region on a cross-section of the magnetic powder prepared in Example 2.
FIG. 5B shows results of line analysis of the entire α-Fe-containing region on a cross-section of the magnetic powder prepared in Example 2.
FIG. 6A shows STEM and STEM-EDX images of a cross-section near the surface of the magnetic powder prepared in Example 4.
FIG. 6B shows results of line analysis of a cross-section near the surface of the magnetic powder prepared in Example 4.
FIG. 7A shows a STEM-EDX image of the entire α-Fe-containing region on a cross-section of the magnetic powder prepared in Example 4.
FIG. 7B shows results of line analysis of the entire α-Fe-containing region on a cross-section of the magnetic powder prepared in Example 4.
FIG. 8 shows a TEM image and an electron diffraction pattern of the entire α-Fe-containing region on a cross-section of the magnetic powder prepared in Example 4.
FIG. 9 shows the frequency dependences of the complex relative permeabilities of magnetic materials containing the magnetic powders prepared in Examples 1 to 4 and Comparative Examples 1 to 3.
FIG. 10 shows an enlarged view of the cross-section near the surface of the magnetic powder prepared in Example 1 shown in FIG. 3A.
FIG. 11 shows the frequency dependence of the complex relative permeability of a magnetic material containing a magnetic powder prepared in Example 6.

### DESCRIPTION OF EMBODIMENTS

Embodiments of the present disclosure are described in detail below. The following embodiments, however, are intended as examples to give a concrete form to the technical idea of the present disclosure and are not intended to limit the scope of the present disclosure to the following embodiments. As used herein, the term "step" encompasses not only an independent step but also a step that may not be clearly distinguished from other steps, as long as a desired object of the step is achieved. Moreover, numerical ranges indicated using "to" refer to ranges including the numerical values before and after "to" as the minimum and maximum, respectively.

As used herein, the term "high frequency" refers to electromagnetic waves with high frequencies. In this disclosure, the term refers to electromagnetic waves of at least 1 MHz but lower than 1 GHz, unless otherwise stated. Moreover, the term "hyper-high frequency" refers to electromagnetic waves with higher frequencies (at least 1 GHz but not higher than 1 THz) than "high frequency".

As used herein, the term "good efficiency" means that the ratio of the imaginary part (µ") to the real part (µ') of the complex relative permeability (µ), i.e., tan δ = µ"/µ' (also called loss factor), of a magnetic material is small at a given frequency f. Herein, δ is called the phase difference, and the value of (90° - δ) is called the phase angle θ. Thus, the term "good efficiency" means a large θ value close to 90°, contrary to δ. With a small tan δ or δ value or a large θ value close to 90°, it is possible to amplify electromagnetic waves at a given frequency f while reducing their loss. With regard to magnetic field amplification characteristics, a larger θ value (smaller tan δ or δ value) is referred to as "improved θ (tan δ)", while a smaller θ value (larger tan δ or δ value) is referred to as "deteriorated θ (tan δ)" in terms of magnetic field amplification characteristics.

In the present specification, "magnetic field amplification" characteristics mean that the real part (µ') of the complex relative permeability of a magnetic material is larger than the real part (= 1) of the relative permeability of vacuum, and the magnetic field in the space where the magnetic material is placed is increased as compared to the magnetic field in vacuum (or in the atmosphere). Good or high magnetic field amplification characteristics mean high µ'. Materials with µ' values exceeding 2 at a given frequency f are referred to as "magnetic materials for magnetic field amplification" (at the frequency f). The term "relative permeability" when used alone is a general term for the absolute values of the real part and the imaginary part of the complex relative permeability. High relative permeability means that the real part of the relative permeability is high, unless otherwise stated.

As used herein, "hyper-high frequency absorption" characteristics refer to absorption characteristics in a hyper-high frequency range and mean that the imaginary part (µ") of the complex relative permeability of a magnetic material in a hyper-high frequency range is larger than 0, and high frequencies incident to the space where the magnetic material is placed are attenuated. Good or high hyper-high frequency absorption characteristics at a given frequency f mean high µ" at the frequency f. Moreover, materials with µ" values exceeding 0 in a hyper-high frequency range are referred to as "magnetic materials for hyper-high frequency absorption". For magnetic materials for hyper-high frequency absorption only, higher µ" and lower µ" may also be referred to as "improved µ"" and "deteriorated µ"", respectively. Moreover, magnetic field amplification characteristics in a high frequency range and absorption characteristics in a hyper-high frequency range are collectively referred to as high-frequency characteristics.

### α-Fe-containing rare earth-iron-nitrogen-based magnetic powder

An α-Fe-containing rare earth-iron-nitrogen-based magnetic powder according to the present embodiment includes a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of the total R content, and an α-Fe-containing region outside the core region, the α-Fe-containing region containing α-Fe and at least one selected from the group consisting of oxides, nitrides, and oxynitrides of the rare earth R.

### Core region

The core region includes a rare earth-iron-nitrogen-based powder. Specifically, it contains a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of the total R content. The core region may be a nitride having a Th₂Zn₁₇-type or Th₂Ni₁₇-type crystal structure and containing R, iron (Fe), and nitrogen (N), where R represents at least one selected from Y, Ce, Pr, Nd, Gd, Tb, Dy, Ho, Er, Tm, Lu, and Sm, and when R contains Sm, Sm constitutes less than 50 atm% of the total R content, as represented by the general formula: RₓFe_{100-x-y}N_{y}, preferably wherein x is at least 3 but not more than 30; y is at least 10 but not more than 30; and the balance is mainly Fe. When R contains Sm, Sm constitutes less than 50 atm%, preferably 25 atm% or less, more preferably 5 atm% or less of the total R content.

The rare earth-iron-nitrogen-based magnetic powder included in the core region may be produced by any method. Exemplary production methods are described in detail below.

### Solid phase method

A method of producing a rare earth-iron-nitrogen-based magnetic powder according to a solid phase method includes:
mixing an R oxide powder, a Fe raw material, and a Ca powder (mixing step);
reducing the resulting mixture (reduction step); and
nitriding alloy particles obtained in the reduction step (nitridation step).

### Mixing step

The mixing step includes mixing a rare earth R oxide powder, a Fe raw material, and a Ca powder to obtain alloy particles. In the mixing step, not only metallic Fe but also Fe₂O₃ and/or Fe₃O₄ can be used as the Fe raw material. The amount of Fe₂O₃ and/or Fe₃O₄ if used (the total number of moles of Fe in Fe₂O₃ and/or Fe₃O₄ relative to the total number of moles of Fe in metallic Fe and Fe₂O₃ and/or Fe₃O₄) is preferably not more than 30 atm%. The reaction heat generated when the iron oxides are reduced by Ca may allow the overall reaction to uniformly proceed, thereby saving the external energy and enhancing the yield. The amount of granular Ca mixed needs to be enough to reduce the R oxide and the selectively mixed metal oxides. The amount of granular Ca mixed may be at least 0.5 times but not more than three times, preferably at least one time but not more than two times the equivalent amount of oxygen atoms in the R oxide and selectively mixed Fe₂O₃ and/or Fe₃O₄.

### Reduction step

The powder mixture obtained in the mixing step may be placed in a heating vessel which can be vacuum-evacuated. After vacuum evacuation of the heating vessel, the powder mixture may be heated at a temperature of at least 600°C but not higher than 1300°C, preferably at least 700°C but not higher than 1200°C, more preferably at least 800°C but not higher than 1100°C while passing argon gas therethrough. If the heating temperature is lower than 600°C, the reduction reaction of the oxides may not proceed. If the heating temperature is higher than 1300°C, the rare earth and Fe may melt into bulk form. Moreover, when the heating temperature is at least 700°C, the reduction time tends to be shortened, resulting in improved productivity. When the heating temperature is not higher than 1200°C, scattering of Ca tends to be reduced, resulting in further reduced variations during the reduction. To more uniformly perform the reduction reaction, the heat treatment time may be not longer than four hours, preferably shorter than 120 minutes, more preferably shorter than 90 minutes. The lower limit of the heat treatment time is preferably at least 10 minutes, more preferably at least 30 minutes. Here, when the powder mixture contains an appropriate amount of Fe₂O₃ and/or Fe₃O₄ in addition to metallic Fe, they can self-heat during the temperature rise, so that a uniform reaction can proceed efficiently. However, if metallic Fe is mixed with Fe₂O₃ and/or Fe₃O₄ in an amount, calculated as elementary Fe, which exceeds 30 atm% as described in the mixing step, explosion or scattering may occur due to extremely high heat generation. Moreover, the particle size of the resulting rare earth-iron-nitrogen-based magnetic powder may be controlled by controlling the reduction temperature. Generally, the higher the reduction temperature, the larger the powder particle size.

### Nitridation step

The nitridation step includes nitriding the alloy particles obtained in the reduction step. Preferably, cooling may be performed in argon gas to a temperature range of at least 250°C but not higher than 800°C, more preferably at least 300°C but not higher than 600°C. To increase the reaction efficiency by reducing decomposition of the nitridation reaction product in the later stage of the nitridation step, the temperature is still more preferably lowered to a temperature range of at least 400°C but not higher than 550°C. Subsequently, the heating vessel may be again vacuum-evacuated and then nitrogen gas may be introduced thereinto. The gas to be introduced is not limited to nitrogen and may be nitrogen atom-containing gas such as ammonia. The contents may be heated for several hours, preferably for about five hours, while passing nitrogen gas therethrough at atmospheric pressure or higher, followed by stopping the heating and leaving them to cool.

The product obtained after the nitridation step may contain, in addition to the rare earth-iron-nitrogen-based magnetic powder, materials such as by-product CaO and unreacted metal calcium, which may be combined into sintered bulk form. In this case, a water washing step may be performed in which these products may be introduced into ion exchange water to separate the calcium oxide (CaO) and other calcium-containing components as a calcium hydroxide (Ca(OH)₂) suspension from the magnet powder. In the water washing step, stirring in water, allowing to stand, and supernatant removal may be repeated several times. Further, the residual calcium hydroxide may be sufficiently removed by washing the magnetic powder with acetic acid or the like. The water washing step is preferably performed after the heat treatment in a nitrogen atmosphere because the residual unreacted Ca can be converted into calcium nitride (Ca₃N₂), which is easier to remove. The rare earth-iron-nitrogen-based magnetic powder obtained as above tends to have a sharper particle size distribution.

### Precipitation method

A method of producing a rare earth-iron-nitrogen-based magnetic powder according to a precipitation method includes:
mixing a solution containing R and Fe with a precipitant to obtain a precipitate containing R and Fe (precipitation step);
firing the precipitate to obtain an oxide containing R and Fe (oxidation step);
heat-treating the oxide in a reducing gas-containing atmosphere to obtain a partial oxide (pretreatment step);
reducing the partial oxide (reduction step); and
nitriding alloy particles obtained in the reduction step (nitridation step).

### Precipitation step

In the precipitation step, an R raw material containing a rare earth R and a Fe raw material containing iron Fe may be dissolved in a strong acid solution to prepare a solution containing R and Fe. Any R or Fe raw material which can be dissolved in a strong acid solution may be used. In view of availability, examples of the R raw material include R oxides, and examples of the Fe raw material include iron sulfate (FeSO₄). The concentration of the solution containing R and Fe may be appropriately adjusted within a range in which the R raw material and the Fe raw material can be substantially dissolved in the acid solution. In view of solubility, examples of the acid solution include sulfuric acid.

The solution containing R and Fe may be reacted with a precipitant to obtain an insoluble precipitate containing R and Fe. Here, the solution containing R and Fe can be any solution that contains R and Fe at the time of the reaction with a precipitant. For example, separate solutions each containing a respective one of an R raw material and a Fe raw material may be prepared and individually added dropwise to be reacted with a precipitant. When the separate solutions are prepared, the solutions may also be appropriately adjusted within a range in which the respective raw materials can be substantially dissolved in the acid solution. The precipitant may be any alkaline solution that can react with the solution containing R and Fe to give a precipitate. Examples include ammonia water and caustic soda, with caustic soda being preferred.

After separating the precipitate, the separated precipitate is preferably subjected to solvent removal in order to inhibit aggregation of the precipitate caused by evaporation of the residual solvent in which the precipitate has been re-dissolved during the heat treatment in the subsequent oxidation step, and to inhibit changes in properties such as particle size distribution and powder particle size. Specifically, when the solvent used is water, for example, the solvent removal may be performed by drying in an oven at a temperature of at least 70°C but not higher than 200°C for at least 5 hours but not longer than 12 hours.

The precipitation step may be followed by washing and separating the resulting precipitate. The washing process may be appropriately performed until the conductivity of the supernatant solution reaches 5 mS/m or lower. The precipitate separation process may be performed, for example, by mixing the resulting precipitate with a solvent (preferably water), followed by filtration, decantation, or other separation methods.

### Oxidation step

In the oxidation step, the precipitate formed in the precipitation step may be fired to obtain an oxide containing R and Fe. For example, the precipitate may be converted into an oxide by heat treatment. The heat treatment of the precipitate needs to be performed in the presence of oxygen, for example in an air atmosphere. Moreover, since the presence of oxygen is necessary, the non-metal portions of the precipitate preferably contain oxygen atoms. The heat treatment temperature in the oxidation step (hereinafter, oxidation temperature) is not limited, but it is preferably at least 700°C but not higher than 1300°C, more preferably at least 900°C but not higher than 1200°C. If the oxidation temperature is lower than 700°C, the oxidation tends to be insufficient. If the oxidation temperature is higher than 1300°C, the resulting rare earth-iron-nitrogen-based magnetic powder tends not to provide the desired shape, average particle size, or particle size distribution. The heat treatment time is not limited either and may be at least 0.5 hours but not longer than four hours, preferably at least one hour but not longer than three hours.

### Pretreatment step

In the pretreatment step, the oxide containing R and Fe may be heat-treated in a reducing gas-containing atmosphere to obtain a partial oxide which is a partially reduced oxide.

### Reduction step

In the reduction step, the partial oxide may be heated in the presence of a reducing agent at a temperature of at least 600°C but not higher than 1300°C, preferably at least 700°C but not higher than 1200°C, more preferably at least 800°C but not higher than 1100°C to obtain alloy particles. If the heating temperature is lower than 600°C, the reduction reaction of the oxide may not proceed. If the heating temperature is higher than 1300°C, R and Fe may melt into bulk form. Moreover, when the heating temperature is at least 700°C, the reduction time tends to be shortened, resulting in improved productivity. When the heating temperature is not higher than 1200°C, scattering of the reducing agent Ca tends to be reduced, resulting in further reduced variations during the reduction. The particle size of the rare earth-iron-nitrogen-based magnetic powder may be controlled by controlling the reduction temperature. Generally, the higher the reduction temperature, the larger the powder particle size. To more uniformly perform the reduction reaction, the heat treatment time is preferably shorter than 120 minutes, more preferably shorter than 90 minutes. The lower limit of the heat treatment time is preferably at least 10 minutes, more preferably at least 30 minutes.

### Nitridation step

In the nitridation step, the alloy particles obtained in the reduction step may be nitrided to obtain an anisotropic magnetic powder. As the particulate precipitate obtained in the precipitation step described above is used, the alloy particles obtained in the reduction step are in porous bulk form. This allows the alloy particles to be directly nitrided by heat treatment in a nitrogen atmosphere without grinding, resulting in uniform nitridation.

The heat treatment temperature in the nitridation of the alloy particles (hereinafter, nitridation temperature) is preferably at least 250°C but not higher than 800°C, more preferably at least 300°C but not higher than 600°C. Moreover, to increase the reaction efficiency by inhibiting decomposition of the nitridation reaction product in the nitridation step to be performed later, the nitridation is particularly preferably performed within a temperature range of at least 400°C but not higher than 550°C in an atmosphere substituted with nitrogen. The heat treatment time may be selected such that the alloy particles can be sufficiently uniformly nitrided.

### α-Fe-containing region

The α-Fe-containing region is present outside the core region. The α-Fe-containing region contains α-Fe and at least one selected from the group consisting of oxides, nitrides, and oxynitrides of the rare earth R. The α-Fe-containing region preferably contains an oxide or oxynitride of the rare earth R. An oxide, a nitride, and an oxynitride of the rare earth R that is, for example, Nd are neodymium oxide, neodymium nitride, and neodymium oxynitride, respectively. The α-Fe-containing region can increase the insulation between the adjacent magnetic particles and reduce iron loss due to inter-particle eddy currents, thereby further improving the tan δ and phase angle θ in a high frequency range. Thus, a magnetic material for magnetic field amplification with higher efficiency can be obtained. The α-Fe-containing region may further contain a complex oxide, a complex nitride, or a complex oxynitride containing a rare earth R and iron or the like to a degree at which the magnetically coupling is not impaired. Such a complex oxide, complex nitride, or complex oxynitride may have a perovskite structure or a spinel structure. Further, the α-Fe-containing region can magnetically couple the adjacent magnetic particles to reduce the demagnetizing field, whereby the real part µ' of the permeability of the magnetic material for magnetic field amplification tends to be further improved.

The α-Fe-containing region preferably contains a nanocrystal including at least one selected from the group consisting of oxides, nitrides, and oxynitrides of the rare earth R and a nanocrystal including α-Fe. The inclusion of these nanocrystals is considered to provide a higher electric insulation effect and a higher magnetic coupling effect. Herein, the term "electric insulation" means that the presence of the α-Fe-containing region or the like having high electrical resistance on the surface of the magnetic powder can block the conduction between the core regions of the adjacent magnetic particles, thereby preventing the generation of eddy currents across the core regions. Such electric insulation can reduce eddy current loss, thereby achieving "good efficiency". Also, the term "magnetic coupling" as used herein means that the presence of the α-Fe-containing region or the like having high electrical resistance and ferromagnetism on the surface of the magnetic powder can produce ferromagnetic coupling or magnetostatic coupling between the adjacent core regions. Such magnetic coupling can reduce the local demagnetizing field and thus weaken the demagnetizing field acting on the core region, thereby achieving high relative permeability. To exhibit the effects described above, the α-Fe-containing region is preferably present outside the core region as an α-Fe-containing region layer.

The nanocrystal including at least one selected from the group consisting of oxides, nitrides, and oxynitrides of the rare earth R in the α-Fe-containing region preferably has an average particle size of at least 1 nm but less than 1000 nm, more preferably at least 1 nm but not more than 100 nm, still more preferably at least 1 nm but not more than 20 nm, particularly preferably at least 1 nm but not more than 10 nm. The nanocrystal including α-Fe preferably has an average particle size of at least 1 nm but less than 1000 nm, more preferably at least 1 nm but not more than 100 nm, still more preferably at least 1 nm but not more than 20 nm, particularly preferably at least 1 nm but not more than 10 nm. The particle sizes of the nanocrystals can be measured on a cross-section of the α-Fe-containing rare earth-iron-nitrogen-based magnetic powder by transmission electron microscopy (TEM), scanning transmission electron microscopy (STEM), or energy dispersive X-ray spectroscopy (EDX).

Moreover, when the crystallite size of the nanocrystal including α-Fe is at least 1 nm but not more than 100 nm, it can be calculated from the full width at half maximum of the peak of a (110) plane measured by powder X-ray diffraction using the Scherrer equation: D = Kλ/β cos θ (K: Scherrer constant 0.9, λ: X-ray wavelength (nm), β: full width at half maximum of diffraction peak (in radians), θ: diffraction angle (in radians)). For example, the full width at half maximum of the nanocrystal including α-Fe may be measured using an X-ray source of CuKα at 40kV and 20mA in the range of 10 < 2θ < 90 with a step width of 2θ = 0.02. For example, the measurement may be performed at a wavelength λ of 0.154 nm.

The atomic concentration (atm%) of Fe in the entire α-Fe-containing region is preferably at least 25%, more preferably at least 50%. The upper limit of the atomic concentration of Fe is not limited and may be not higher than 80%. With an atomic concentration of Fe of at least 25%, the magnetic coupling tends to be maintained, resulting in a decrease in demagnetizing field and an increase in permeability.

The atomic concentration (atm%) of the rare earth R in the entire α-Fe-containing region is preferably at least 2% but not higher than 50%, more preferably at least 5% but not higher than 30%. The atomic concentration (atm%) of nitrogen in the entire α-Fe-containing region is preferably at least 0% but not higher than 50%, more preferably at least 0.01% but not higher than 30%. The atomic concentration (atm%) of oxygen in the entire α-Fe-containing region is preferably at least 0% but not higher than 55%, more preferably at least 0.01% but not higher than 30%. The atomic concentration of each element in the α-Fe-containing region can be determined by averaging the atomic concentrations at each point in the region measured by STEM-EDX line analysis.

The average atomic concentration (atm%) of O in the entire α-Fe-containing region is preferably higher than the average atomic concentration (atm%) of O in the core region. The average atomic concentration of O in the α-Fe-containing region is preferably at least 1.05 times, more preferably at least 1.5 times, still more preferably at least 2 times, particularly preferably at least 4 times the average atomic concentration of O in the core region. Moreover, the average atomic concentration of R in the α-Fe-containing region is not more than 2 times, preferably not more than 1.9 times, more preferably not more than 1.8 times the average atomic concentration of R in the core region. The average atomic concentration of R in the α-Fe-containing region may be at least 0.1 times, preferably at least 0.5 times the average atomic concentration of R in the core region. Here, the term "average atomic concentration" of a specific element refers to the atomic concentration determined by performing STEM-EDX line analysis on one or more line segments extending in the thickness direction from the core region to the outermost surface of the α-Fe-containing region of the α-Fe-containing rare earth-iron-nitrogen-based magnetic powder to measure the atomic concentrations of the element X of at least 50 points and averaging them.

The thickness of the α-Fe-containing region is preferably at least 0.01% but less than 50%, more preferably at least 0.01% but not more than 45%, still more preferably at least 0.01% but not more than 35%, particularly preferably at least 0.5% but not more than 20% of the average particle size of the α-Fe-containing rare earth-iron-nitrogen-based magnetic powder. When the thickness is at least 0.001%, the electric insulation tends to be improved. When the thickness is less than 50%, the µ' tends to increase due to the core region containing the rare earth R, Fe, and N.

The α-Fe-containing region preferably has a thickness of at least 1 nm but not more than 10 µm, more preferably at least 10 nm but not more than 5 µm. To improve the µ' in a high frequency range, the thickness is still more preferably at least 50 nm but not more than 1 µm. When the thickness is at least 1 nm, the electric insulation tends to be improved. When the thickness is not more than 10 µm, the µ' tends to increase due to the core region. The thickness of the α-Fe-containing region can be measured by performing compositional analysis of a TEM, STEM, or FE-SEM image of a cross-section of the α-Fe-containing rare earth-iron-nitrogen-based magnetic powder using TEM imaging or secondary electron or backscattered electron imaging or using line analysis, area analysis, or point analysis with sufficient measurement points by EDX.

The surface coverage with the α-Fe-containing region of the core region is preferably at least 10%, more preferably at least 50%, still more preferably at least 80%, particularly preferably 100%. Increasing the surface coverage of the core region has the effect of increasing the electric insulation and improving the tan δ and the phase angle θ. In particular, a surface coverage of 100% can further promote electrical isolation of the magnetic powder, thereby further increasing the above effect. The surface coverage with the α-Fe-containing region of the core region can be measured by observing a cross-section of the powder using a TEM, STEM, or FE-SEM equipped with an EDX. The "surface coverage" is defined as the ratio of the length of the contact portion between the α-Fe-containing region and the core region to the entire circumferential length of the core region observed. Here, preferably, cross-sections of 20 to 50 particles of the magnetic powder in images observed as described above may be measured and averaged, and the average value may be taken as the surface coverage.

In a preferred embodiment of the α-Fe-containing rare earth-iron-nitrogen-based magnetic powder, the core region contains a rare earth-iron-nitrogen-based compound, and the α-Fe-containing rare earth-iron-nitrogen-based magnetic powder has an XRD diffraction pattern in which the ratio (I)/(II) of the diffraction peak intensity (I) of the (110) plane of α-Fe to the peak intensity (II) of the strongest line of the rare earth-iron-nitrogen-based compound in the core region is at least 0.01 but lower than 10, more preferably at least 0.02 but lower than 5, still more preferably at least 0.1 but not higher than 2. The diffraction peak intensity (I) of the (110) plane of α-Fe represents the abundance of α-Fe. When the ratio (I)/(II) is at least 0.01 but lower than 10, both the magnetic coupling and electric insulation between the magnetic particles tend to be achieved. When the ratio (I)/(II) is at least 0.01, an α-Fe separate phase with a specific thickness is present, which tends to improve the electric insulation and increase the µ'. When the ratio (I)/(II) is lower than 10, the volume fraction of the core region increases while improving the electric insulation, whereby the µ' tends to increase. Here, the diffraction peak intensities in the XRD diffraction pattern can be measured using an X-ray powder crystal diffractometer, and the measured diffraction peak intensity of the (110) plane of α-Fe may be divided by the peak intensity of the strongest line of the rare earth-iron-nitrogen-based compound included in the core region. For example, the measurement can be performed using an X-ray source of CuKα at 40 kV and 20 mA in the range of 10 < 2θ < 90 with a step width of 2θ = 0.02. The strongest line of the rare earth-iron-nitrogen-based compound corresponds to the (303) plane in the case of a Th₂Zn₁₇-type crystal (rhombohedral system) and to the (302) plane in the case of a Th₂Ni₁₇-type crystal (hexagonal system) .

The α-Fe-containing region may have a structure in which nanocrystals of a ferromagnetic α-Fe phase are isolated in an R oxynitride phase, i.e., what is called a sea (R oxynitride phase)-island (nano α-Fe phase) structure. Here, α-Fe and the R oxynitride refers to a substance selected from the group consisting of oxides, nitrides, and oxynitrides of the rare earth R. In the α-Fe-containing region having a sea (R oxynitride phase)-island (nano α-Fe phase) structure, each α-Fe metal phase is isolated in the "sea" (R oxynitride matrix phase). Thus, percolation of electrons does not occur, and the electric insulation is maintained.

Moreover, the α-Fe phases may be regularly arranged in the α-Fe-containing region. In the α-Fe-containing region with regularly arranged α-Fe phases, the α-Fe phases can be included as nanocrystal particles and can also be regularly arranged with a high density. Thus, the α-Fe phases may be ferromagnetically or magnetostatically coupled with each other to allow the magnetic flux to easily pass through the α-Fe-containing region, whereby the magnetic coupling also tends to be more stable.

Moreover, the α-Fe-containing region may have a sea-island structure including a sea region and an island region in which the island region has a higher atomic concentration (%) of Fe, a lower atomic concentration (%) of the rare earth R, and a lower atomic concentration (%) of O than the sea region. The atomic concentration (%) of Fe in the island region is preferably higher by at least 10 points, more preferably higher by at least 20 points than the atomic concentration (%) of Fe in the sea region. The atomic concentrations (%) of the rare earth R and O in the sea region are preferably higher by at least 2 points, more preferably higher by at least 5 points than the atomic concentrations (%) of the rare earth R and O in the island region, respectively. The atomic concentration (%) of each element in the island or sea region can be determined by averaging the atomic concentrations at each point in the region measured by STEM-EDX line analysis.

The α-Fe-containing rare earth-iron-nitrogen-based magnetic powder may have the following properties when measured by XRD. With regard to the α-Fe-containing rare earth-iron-nitrogen-based magnetic powder, the diffraction peak intensity from the R oxynitride is added to the diffraction peak intensity of the α-Fe (110) plane due to lattice matching between the α-Fe and R oxynitride phases. Thus, the detected diffraction peak intensity of the α-Fe (110) plane is apparently stronger than the peak intensity expected in the absence of lattice matching between the α-Fe and R oxynitride phases. The size of the oriented crystal phase is preferably 1 to 100%, more preferably 10 to 100% of the film thickness of the α-Fe-containing region. If the size is less than 1%, the magnetic coupling effect may be small. A higher volume fraction of the oriented region relative to the α-Fe-containing region is preferred, and the volume fraction is preferably 1 to 100%, more preferably 10 to 100%. With a volume fraction of at least 1%, the effect of enhancing the magnetic coupling may in some cases be higher than that in the absence of orientation.

The presence or absence of an oriented crystalline phase as well as the size and the volume fraction of the oriented crystalline phase can be measured, for example, by observation of a STEM image of the α-Fe-containing rare earth-iron-nitrogen-based magnetic powder or by using an electron diffraction (ED) device attached to a TEM device. For example, in a STEM photograph of a cross-section of the α-Fe-containing rare earth-iron-nitrogen-based magnetic powder, a region including both the α-Fe and R oxynitride phases and having lattice fringes in one direction is defined as the "oriented region" and subjected to image analysis. Five regions each including the α-Fe-containing region of the α-Fe-containing rare earth-iron-nitrogen-based magnetic powder (in the case of a thick α-Fe-containing region, the region can be divided into several fields of view) may be photographed with a scanning transmission electron microscope (STEM), and an "oriented region" may be compared with an unoriented region in each photographed region to determine the size and the volume fraction of the oriented crystalline phase. The presence or absence of an oriented crystal can also be determined from an electron diffraction pattern of a STEM-ED image.

### Phosphorus compound coating portion

The α-Fe-containing rare earth-iron-nitrogen-based magnetic powder preferably further includes a phosphorus compound coating portion. The phosphorus compound coating portion is preferably present outside the α-Fe-containing region, i.e., opposite the core region across the α-Fe-containing region.

To improve the tan δ and phase angle θ of the magnetic material in a high frequency range as well as the µ" in a hyper-high frequency range, the thickness of the phosphorus compound coating portion is preferably at least 1 nm but not more than 200 nm, more preferably at least 2 nm but not more than 50 nm. Here, the thickness of the coating portion can be measured by performing compositional analysis of a TEM, STEM, or FE-SEM image of a cross-section of the α-Fe-containing rare earth-iron-nitrogen-based magnetic powder using line analysis, area analysis, or point analysis with sufficient measurement points by EDX. In the measurement using line analysis, etc., for example, a region where the atomic concentration of phosphorus (P) is observed to be at least 1 atm% may be regarded as the phosphorus compound coating portion. An example is a structure in which the phosphorus compound coating portion covers the entire surface (surface coverage 100%) of the α-Fe-containing rare earth-iron-nitrogen-based magnetic powder. In this case, the adjacent magnetic particles are considered to be completely electrically insulated from each other. In other words, this structure can have the effect of reducing iron loss due to inter-particle eddy currents by the phosphorus compound coating portion and can further improve the tan δ and phase angle θ in a high frequency range to provide a more efficient magnetic material for magnetic field amplification. Moreover, it can reduce the influence of eddy currents in a frequency range up to a hyper-high frequency range to provide a magnetic material for hyper-high frequency absorption that maintains higher hyper-high frequency absorption characteristics. Here, the phosphorus compound coating portion may not completely cover the surface of the α-Fe-containing rare earth-iron-nitrogen-based magnetic powder, and a surface coverage of at least 10% is expected to have the eddy current-reducing effect to some degree. The desired surface coverage is preferably at least 50%, more preferably at least 80%. At a surface coverage of at least 10% but less than 80%, a free phosphorus compound is preferably present between the particles of the magnetic powder. The surface coverage with the phosphorus compound coating portion of the magnetic powder can be estimated by observing a cross-section of the powder using a TEM, STEM, or FE-SEM equipped with an EDX. The "surface coverage" is defined as the ratio of the length of the contact portion of the phosphorus-containing coating film to the entire circumferential length of the surface of the α-Fe-containing rare earth-iron-nitrogen-based magnetic powder observed. Here, preferably, cross-sections of 20 to 50 particles of the magnetic powder in images observed as described above may be measured and averaged, and the average value may be taken as the surface coverage.

Examples of the phosphorus compound included in the phosphorus compound coating portion include phosphate compounds such as inorganic phosphoric acids such as orthophosphoric acid, pyrophosphoric acid, and polyphosphoric acid, and phosphates of these inorganic phosphoric acids with Na, Ca, Pb, Zn, Fe, R, ammonium, Mo, W, V, Cr, etc. (herein, these metal elements or atomic groups are referred to as M components and may also be denoted simply as M); and "phosphorus-containing amorphous compounds" and "phosphorus-containing nanocrystalline compounds" which contain at least one selected from R, Fe, M, and N, and P and/or a phosphorus-containing substance. Among these, phosphates, "phosphorus-containing amorphous compounds", and "phosphorus-containing nanocrystalline compounds" are preferred, e.g., from the standpoint of forming a dense surface coating on the powder including a core region and an α-Fe-containing region. The "phosphorus-containing nanocrystalline compounds" may be rare earth phosphates or may be in the form of eutectic or mixed crystals containing a rare earth phosphate and at least one selected from iron phosphates and M phosphates. The presence of a "phosphorus-containing nanocrystalline compound" provides better thermal stability, so that the high-frequency characteristics of the magnetic powder tend not to readily deteriorate, even when the magnetic powder after phosphorus treatment undergoes a kneading step or heat-curing step in which high heat is applied in the production of a bonded magnetic material. Further, this can contribute to high thermal stability and good efficiency of the resulting molded product. Here, the term nanocrystal refers to a fine crystal of at least 1 nm but less than 1 µm. Phosphorus compounds containing fine crystals of less than 1 nm are considered to fall into amorphous compounds. The crystallinity of the phosphorus compound coating portion and the diameter of the fine crystals in the phosphorus compound coating portion can be determined by lattice image observation using a TEM method or by analysis using an electron diffraction (ED) device attached to a TEM device.

The α-Fe-containing rare earth-iron-nitrogen-based magnetic powder preferably has a phosphorus compound content of at least 0.5% by mass but not more than 4.5% by mass, more preferably at least 0.55% by mass but not more than 2.5% by mass, most preferably at least 0.75% by mass but not more than 2% by mass. With a phosphorus compound content of not more than 4.5% by mass, aggregation of the rare earth-iron-nitrogen-based magnetic powder may be reduced, which tends to reduce a decrease in relative permeability and, at the same time, tends to reduce deterioration of the tan δ and phase angle θ in a high frequency range. With a phosphorus compound content of at least 0.5% by mass, the electric insulation of the phosphorus compound coating portion can be further improved, which also tends to reduce a decrease in relative permeability and to reduce deterioration of the tan δ and phase angle θ in a high frequency range.

Moreover, the α-Fe-containing rare earth-iron-nitrogen-based magnetic powder preferably has a phosphorus (P) element content of at least 0.02% by mass, more preferably at least 0.05% by mass, still more preferably at least 0.15% by mass. The α-Fe-containing rare earth-iron-nitrogen-based magnetic powder preferably has a phosphorus content of not more than 4% by mass, more preferably not more than 2% by mass, still more preferably not more than 1% by mass.

To avoid a reduction in efficiency due to eddy currents, i.e., to prevent deterioration of the tan δ and phase angle θ, the phosphorus compound preferably at least partially covers the surface of the powder including a core region and an α-Fe-containing region. The magnetic powder with a surface coverage of at least 10% can have the eddy current-reducing effect to some degree, but desirably the surface coverage is preferably at least 50%, more preferably at least 80%. A surface coverage of at least 10% tends to reduce inter-particle eddy currents and reduce deterioration of the tan δ and phase angle θ. The α-Fe-containing rare earth-iron-nitrogen-based magnetic powder with 100% coverage with the phosphorus compound coating portion can have extremely deteriorated tan δ and phase angle θ and may achieve a tan δ value of not more than 0.01 and a high θ value at 2 MHz, depending on the composition, crystal structure, powder particle size, etc. of the magnetic powder.

Also, to avoid a reduction in relative permeability, especially µ", due to eddy currents, i.e., to prevent deterioration of the hyper-high frequency absorption characteristics, the phosphorus compound preferably at least partially covers the surface of the powder including a core region and an α-Fe-containing region. A surface coverage of at least 10% can have the eddy current-reducing effect to some degree, but desirably the surface coverage is preferably at least 50%, more preferably at least 80%. If the surface coverage is lower than 10%, inter-particle eddy currents cannot be sufficiently blocked, so that the µ" tends to be reduced by the skin effect. The α-Fe-containing rare earth-iron-nitrogen-based magnetic powder with 100% coverage with the phosphorus compound coating portion can have an extremely small reduction in relative permeability due to eddy currents and may achieve a µ" value of at least 1 at 1 GHz, depending on the composition, crystal structure, powder particle size, etc. of the magnetic powder.

The phosphorus compound coating portion present on the surface of the α-Fe-containing rare earth-iron-nitrogen-based magnetic powder may include a region (R rich region) in which the atomic concentration of the rare earth (R) is higher than the atomic concentration of R in the base material rare earth-iron-nitrogen-based magnetic powder (core region). The atomic concentration of R in the R rich region may be at least 1.05 times, preferably at least 1.1 times, more preferably at least 1.2 times, still more preferably at least 1.5 times the atomic concentration of R in the core region. The atomic concentration of R in the R rich region may also be, for example, not more than 4 times the atomic concentration of R in the core region. Here, the R rich region includes a layer that shows the highest peak of phosphorus (P) in STEM-EDX line analysis of the α-Fe-containing rare earth-iron-nitrogen-based magnetic powder. The R rich region may have a thickness of, for example, at least 1 nm, preferably of at least 3 nm but not more than 150 nm, more preferably at least 5 nm but not more than 100 nm. When the atomic concentration of R in the R rich region is within the above range relative to the atomic concentration of R in the core region, the electrical resistivity tends to increase, resulting in higher relative permeability. The atomic concentration (atm%) of each element in the R rich region can be determined by averaging the atomic concentrations of the element in the phosphorus compound coating portion measured by STEM-EDX line analysis. The rare earth element may be Nd, for example. In this case, the Nd-rich region may be evaluated based on the atomic concentration of Nd.

The atomic concentration of R in the R rich region may be at least 0.3 times, preferably at least 1 time the atomic concentration of Fe in the R rich region. The atomic concentration of R in the R rich region is preferably not more than 20 times the atomic concentration of Fe in the R rich region. With a relationship between the atomic concentration of R and the atomic concentration of Fe in the R rich region being within the above range, the atomic concentration of Fe in the vicinity of the core region tends to decrease, resulting in further improved water resistance.

The ratio of the atomic concentration of R to the atomic concentration of Fe (R/Fe) in the R rich region may be at least 0.3, preferably at least 0.5, more preferably at least 1. The upper limit of the ratio R/Fe in the R rich region may be not higher than 100 or not higher than 10. The ratio R/Fe in the R rich region may also be higher than the ratio R/Fe in the core region. The ratio R/Fe in the R rich region may be at least 1 time, preferably at least 1.5 times, more preferably at least 2 times, still more preferably at least 5 times the ratio R/Fe in the core region. With a ratio R/Fe in the R rich region being within the above range, the atomic concentration of Fe in the vicinity of the core region tends to decrease, resulting in further improved water resistance.

The α-Fe-containing rare earth-iron-nitrogen-based magnetic powder may further include a Mo rich layer. In the Mo rich layer, the Mo used to form the phosphorus compound coating portion is present at a higher concentration than in the iron oxide layer or the α-Fe-containing region. The Mo rich layer is preferably outside the α-Fe-containing region. In some cases, the presence of the Mo rich layer has the effect of increasing the strength of the coating layer to improve the corrosion resistance.

In the α-Fe-containing rare earth-iron-nitrogen-based magnetic powder which includes a Mo rich layer, the thickness of the Mo rich layer is preferably at least 0.01% but not more than 10%, more preferably at least 0.02% but not more than 1% of the average particle size of the α-Fe-containing rare earth-iron-nitrogen-based magnetic powder. The thickness of the Mo rich layer is also preferably at least 1 nm but not more than 1 µm, more preferably at least 2 nm but not more than 100 nm.

The α-Fe-containing rare earth-iron-nitrogen-based magnetic powder may further include an iron oxide layer. The iron oxide layer mainly contains an iron oxide including Fe₂O₃. The iron oxide layer is preferably outside the α-Fe-containing region, more preferably outside the phosphorus compound coating portion, still more preferably outside the Mo rich layer. The presence of the iron oxide layer has the effects of providing thermodynamic stability to the α-Fe-containing region and increasing the electric insulation.

In the α-Fe-containing rare earth-iron-nitrogen-based magnetic powder which includes an iron oxide layer, the thickness of the iron oxide layer is preferably more than 0% but not more than 20%, more preferably at least 0.001% but not more than 5% of the average particle size of the α-Fe-containing rare earth-iron-nitrogen-based magnetic powder. With a thickness of not more than 20%, a decrease in µ' tends to be reduced. The thickness of the iron oxide layer is also preferably more than 0 nm but not more than 1 µm, more preferably at least 1 nm but not more than 100 nm. An iron oxide layer having a thickness of not more than 1 µm tends to reduce a decrease in µ'.

### Particle size of magnetic powder

The average particle size of the α-Fe-containing rare earth-iron-nitrogen-based magnetic powder is preferably at least 0.1 µm but not more than 100 µm. For a magnetic material for magnetic field amplification, the average particle size is preferably at least 1 µm but not more than 100 µm. For a magnetic material for hyper-high frequency absorption, the average particle size is preferably at least 0.1 µm but not more than 10 µm. A more preferred particle size range is at least 3 µm but not more than 100 µm for a magnetic material for magnetic field amplification or is at least 0.1 µm but not more than 3 µm for a magnetic material for hyper-high frequency absorption, as described later. If the average particle size is less than 1 µm, the amount of the magnetic powder filled in the molded product may be reduced, so that the real part of the relative permeability in a high frequency range or the imaginary part of the relative permeability in a hyper-high frequency range may decrease. If the average particle size is not more than 0.1 µm, the specific surface area is further increased, and thus the volume fraction of a magnetic portion having a high real part of the relative permeability in a high frequency range or a high imaginary part of the relative permeability in a hyper-high frequency range may decrease. Consequently, the magnetic material properties tend to be extremely deteriorated. If the average particle size is more than 10 µm, the µ" of the molded product tends to decrease. This tendency is more significant when the average particle size is more than 100 µm. Here, the average particle size refers to the median diameter measured under a dry condition using a laser diffraction particle size distribution analyzer. Specifically, the average particle size of the magnetic powder of the present disclosure is defined as D50, which represents the particle size corresponding to 50% of the cumulative particle size distribution by volume of the α-Fe-containing rare earth-iron-nitrogen-based magnetic powder.

As the particle size of the core region of the Fe-containing rare earth-iron-nitrogen-based magnetic powder increases, eddy currents may start to occur in the particles at a lower frequency due to the skin effect. Thus, with a larger particle size, the real part of the relative permeability may start to decrease in a lower frequency range. Therefore, the magnetic powder having a small particle size tends to maintain high magnetic field amplification characteristics or hyper-high frequency absorption characteristics even at high frequencies. In the case of Nd₂Fe₁₇N₃, for example, the relationship between the particle size r (µm) of the magnetic powder and the frequency f₀ (Hz) at which the real part of the relative permeability starts to decrease is presumably f₀ = 1 THz with r = 0.1 µm, f₀ = 1 GHz with r = 3 µm, and f₀ = 1 MHz with r = 100 µm. Therefore, the core region of the Fe-containing rare earth-iron-nitrogen-based magnetic powder having a particle size with an upper limit around the above range is preferred for a magnetic material for magnetic field amplification according to the present disclosure. Moreover, as the particle size decreases, the amount of the magnetic powder filled in the molded product decreases and the specific surface area also increases. Thus, for example, when the phosphorus compound coating portion has a thickness of 10 nm, the relative permeability can be reduced only by about 50% if the particle size of the powder is 0.1 µm, but the relative permeability can be about 6% if the particle size is 0.05 µm. Therefore, the lower limit of the core region of the Fe-containing rare earth-iron-nitrogen-based magnetic powder of the present disclosure should be around 0.1 µm, regardless of the frequency. In consideration of the above-described tradeoff, the particle size is preferably adjusted to a range that is more suitable for the target frequency range of the magnetic material.

The α-Fe-containing rare earth-iron-nitrogen-based magnetic powder preferably has a real part (µ') of the relative permeability at 10 MHz that is at least 6, more preferably at least 10. When the real part of the relative permeability at 10 MHz is at least 6, the powder is preferred for use in trans cores. The relative permeability of the α-Fe-containing rare earth-iron-nitrogen-based magnetic powder can be measured as follows. The α-Fe-containing rare earth-iron-nitrogen-based magnetic powder may be mixed with an epoxy resin at a mass ratio of the resin to the magnetic powder of 3:97 to prepare a magnetic material for evaluation having a thickness of 1 mm. The prepared magnetic material for evaluation may be analyzed with an impedance analyzer (HP4291B, Hewlett-Packard), whereby the relative permeability can be measured. Hereinbelow, the µ', µ", δ, and θ in the range of at least 1 MHz but lower than 1 GHz can be evaluated using a magnetic material for evaluation prepared as described above.

The α-Fe-containing rare earth-iron-nitrogen-based magnetic powder preferably has a ratio θ₁/θ₂ of at least 0.8, more preferably at least 0.9, where θ₁ represents the phase angle at 100 MHz and θ₂ represents the phase angle at 2 MHz. When the ratio θ₁/θ₂ is at least 0.8 and closer to 1, a decrease in energy efficiency can be reduced even at high frequencies. Here, the phase angle θ is determined when the µ' (real part of the complex relative permeability) and the µ" (imaginary part of the complex relative permeability) are presented on the complex plane, and the phase angle θ corresponds to the complementary angle of δ in the tan δ defined above.

The α-Fe-containing rare earth-iron-nitrogen-based magnetic powder preferably has a phase angle θ at 13 MHz that is at least 85° (a tan δ of not more than 0.0875), more preferably at least 88° (a tan δ of not more than 0.0349). When the phase angle θ at 13 MHz is at least 85°, the powder is suitable as an antenna material for RFID.

Moreover, the core region of the Fe-containing rare earth-iron-nitrogen-based magnetic powder according to the present embodiment has planar magnetocrystalline anisotropy in which the magnetic moment tends to be directed to the c-plane direction rather than the c-axis direction. It is extremely important for the magnetic powder according to the present embodiment to have this feature in order to maintain a high real part µ' of the relative permeability in a high frequency range and further to show a high imaginary part µ" of the relative permeability in a hyper-high frequency range. The magnetic powder according to the present embodiment has a very large absolute value of the negative magnetocrystalline anisotropy energy, and such a magnetic powder having planar magnetocrystalline anisotropy is present without orientation. Thus, the natural resonance frequency is widely distributed within a range of at least 1 GHz but not higher than 1 THz. Accordingly, an increase in µ" and a decrease in µ' due to natural resonance may not occur at lower than 1 GHz, while a high µ" due to natural resonance may be shown in a broad frequency band of at least 1 GHz but not higher than 1 THz. In particular, in the magnetic powder according to the present embodiment, the phosphorus compound and/or the α-Fe-containing region in the magnetic powder covers the surface of the ferromagnetic powder, and the phosphorus compound and/or the iron oxide layer is present between the particles of the magnetic powder. Thus, the generation of inter-particle eddy currents can be inhibited. Further, when the magnetic powder has a predetermined average particle size, the generation of intra-particle eddy currents can also be inhibited. Thus, the inherent high-frequency characteristics of the magnetic powder will be less deteriorated by eddy currents and tend to be further improved in a frequency range of 1 MHz to 1 THz. There is no known "magnetic material for magnetic field amplification" created according to a material design concept that covers such a broad frequency band at once. There is also no known "hyper-high frequency absorbing material" which can function seamlessly in a "very broad frequency band" according to the same design concept.

### Magnetic material for magnetic field amplification

A magnetic material for magnetic field amplification according to the present embodiment is characterized by including an α-Fe-containing rare earth-iron-nitrogen-based magnetic powder. The magnetic material including the α-Fe-containing rare earth-iron-nitrogen-based magnetic powder can have high relative permeability with a µ' value of at least 2 in a frequency range of at least 1 MHz but lower than 1 GHz for magnetic field amplification and may also have good efficiency with a higher phase angle θ in a frequency range of at least 1 MHz but lower than 1 GHz.

The α-Fe-containing rare earth-iron-nitrogen-based magnetic powder preferably has a particle size of at least 1 µm but not more than 100 µm because, as described above, if a powder larger than 100 µm is used in a magnetic material for magnetic field amplification at 1 MHz or higher, the relative permeability tends to decrease due to the skin effect. Further, when a powder of at least 7 µm is used in a magnetic material for magnetic field amplification, since a high pressure of at least 0.5 GPa is usually applied to increase the volume fraction, the powder particles may come into contact with each other and cause a large eddy current loss, thereby greatly reducing the real part of the relative permeability. Therefore, it is preferred that a fine and moderately soft substance such as a phosphorus compound, which is not as hard as ferrite or oxides of transition metals and not as soft as resins, coats the α-Fe-containing rare earth-iron-nitrogen-based magnetic powder or is present between the particles thereof. This can reduce deterioration of the inherent properties such as relative permeability of the magnetic powder.

The magnetic material for magnetic field amplification can be suitably used at a frequency of at least 1 MHz but lower than 1 GHz. At a frequency of at least 1 GHz, the magnetic material is also usable as a magnetic material for hyper-high frequency absorption. Therefore, depending on the composition, particle size distribution, etc. of the α-Fe-containing rare earth-iron-nitrogen-based magnetic powder, the imaginary part of the relative permeability may start to increase in a frequency range of at least 0.5 GHz but lower than 1 GHz. The magnetic material for magnetic field amplification according to the present embodiment may be used in a frequency range of at least 1 MHz but lower than 0.5 GHz, preferably at least 1 MHz but lower than 0.1 GHz. The use of the magnetic material as a magnetic material for magnetic field amplification in the above frequency range is preferred in terms of the balance between cost and properties because a powder of at least 3 µm but not more than 100 µm can be used without using a fine grinding machine such as a jet mill, and also it is not necessary to perform magnetic field orientation or other processes which can reduce the throughput.

Examples of more specific applications of the magnetic material for magnetic field amplification include wireless power transfer coils, magnetic field amplification materials for radio frequency identification (RFID) tags, and transformers, inductors, and reactors of circuits for high frequencies higher than 20 MHz. For example, the magnetic material may be used as a magnetic material for magnetic field amplification as follows: the magnetic material may be prepared in the form of a thin sheet and attached to the back of an antenna or a receiver/transmitter to concentrate the magnetic flux in the sheet by its magnetic field amplification characteristics; alternatively, the magnetic material may be inserted into the inside of a cylindrical or rectangular parallelepiped coil, or a conducting wire may be wound around a donut-shaped magnetic core or a magnetic core with a yoke to improve the real part of the relative permeability of the coil.

The magnetic material for magnetic field amplification according to the present embodiment characteristically has a high real part of the relative permeability even in a high frequency range. For example, the real part of the relative permeability at a frequency of at least 1 MHz but not higher than 20 MHz is preferably at least 3, more preferably at least 4. Moreover, the real part of the relative permeability at a frequency of higher than 20 MHz but lower than 1 GHz is preferably at least 2, more preferably at least 3. Moreover, the magnetic material for magnetic field amplification according to the present embodiment may have a real part µ' of the relative permeability at a frequency of 20 MHz that is, for example, at least 3.2, preferably at least 3.5, more preferably at least 4, still more preferably at least 4.5. The magnetic material for magnetic field amplification according to the present embodiment may have a real part µ' of the relative permeability at a frequency of 20 MHz that is, for example, not more than 200 or not more than 100.

The tan δ (µ"/µ') and phase angle θ at 20 MHz of the magnetic material for magnetic field amplification according to the present embodiment may be not more than 0.33 and at least 79°, more preferably not more than 0.29 and at least 80°, still more preferably not more than 0.25 and at least 86°, respectively. Moreover, the tan δ and phase angle θ at 20 MHz may be not more than 0.0001 and at least 88°, respectively. When the tan δ and phase angle θ at 20 MHz are within the above respective ranges, the magnetic material may preferably serve as a magnetic material for magnetic field amplification with good efficiency and low cost, particularly when it is used around this frequency (for example, at least 10 MHz but not higher than 30 MHz). When the tan δ (µ"/µ') and phase angle θ are at least 79°, the heat generated in the element or system into which the magnetic material is incorporated can be reduced to reduce the temperature of the components, etc. Thus, the stability tends to be improved. When the tan δ and phase angle θ are not more than 0.0001 and at least 89.994°, respectively, the cost required to increase the material homogeneity can be reduced. Here, the complex relative permeability, the tan δ, and the phase angle θ can be determined, for example, by measuring the impedance of a toroidal sample using an impedance analyzer, a (vector) network analyzer, or a BH analyzer, and then converting the result to the complex relative permeability, tan δ, and phase angle θ, respectively, or by using the S parameter method, depending on the frequency range (for example, when measured using a network analyzer at 500 MHz or higher).

The magnetic material for magnetic field amplification according to the present embodiment also characteristically has a relative permeability with low frequency dependence. For example, in a wireless power transfer application where the power is supplied at a frequency of 13.56 MHz, a magnetic material whose real part µ' of the relative permeability varies only slightly in a frequency range including this frequency of at least 2 MHz but not higher than 20 MHz exhibits good efficiency and is thus preferred. Moreover, since many materials have a relative permeability that varies greatly even at 5 MHz or lower, the material having a stable real part of the relative permeability in a frequency range of at least 2 MHz but not higher than 20 MHz is also preferred for applications in this frequency range, etc. In these applications, materials whose µ' varies greatly in the above frequency range also tend to have a correspondingly large deviation of µ" from 0, resulting in deteriorated tan δ and phase angle θ. The ratio of the real part of the relative permeability at 20 MHz to the real part of the relative permeability at 2 MHz is preferably at least 0.8, more preferably at least 0.9. The ratio of the real part of the relative permeability at 20 MHz to the real part of the relative permeability at 2 MHz may also be not higher than 1.1. When the ratio of the real parts of the relative permeabilities is at least 0.8, a decrease in energy efficiency tends to be reduced, so that the heat generated in the device into which the magnetic material is incorporated can be reduced. Moreover, when the ratio of the real parts of the relative permeabilities is not higher than 1.1, the input to and output from the device tend to be easily controllable.

The magnetic material for magnetic field amplification according to the present embodiment may contain a resin. The composite material of the magnetic material and the resin is referred to as the bonded magnetic material. The resin in the bonded magnetic material may be either a thermosetting resin or a thermoplastic resin. Examples of the thermoplastic resin include polyphenylene sulfides (PPS), polyether ether ketones (PEEK), liquid crystal polymers (LCP), polyamides (PA), polypropylenes (PP), polyethylenes (PE), and thermoplastic elastomers. Examples of the thermosetting resin include epoxy resins, phenolic resins, urea resins, melamine resins, guanamine resins, unsaturated polyester resins, vinyl ester resins, diallyl phthalate resins, polyurethane resins, silicone resins, polyimide resins, alkyd resins, furan resins, dicyclopentadiene resins, acrylic resins, allyl carbonate resins, and thermosetting elastomers commonly called rubbers.

The amount of the resin in the bonded magnetic material is preferably at least 0.1% by mass but not more than 95% by mass. When the amount of the resin component is at least 0.1% by mass, the impact resistance can be further improved. When the amount is not more than 95% by mass, a drastic decrease in relative permeability or magnetization can be reduced. Further, in applications which require the bonded magnetic material according to the present embodiment to have high relative permeability as well as impact resistance, the amount is more preferably in the range of at least 0.5% by mass but not more than 50% by mass for the reason described above. In applications such as high frequency circuit transformers with particularly good efficiency, the amount is most preferably in the range of at least 1% by mass but not more than 15% by mass. To provide a magnetic material for magnetic field amplification according to the present embodiment with a particularly high real part of the relative permeability or a hyper-high frequency absorbing material with particularly good absorption characteristics, the amount is also preferably not more than 15% by mass, although the amount may vary more or less depending on the application. A non-sinter-hardened molded product containing no resin, for example, a compact prepared with an auxiliary agent such as a volatile organic solvent, is very fragile and thus is very difficult to apply to, for example, a magnetic material for magnetic field amplification such as a wireless power transfer coil or an inductor magnetic core to which a load will be applied, or a hyper-high frequency absorbing material mounted on a 5G+ or 6G mobile device which is frequently carried and often subjected to impact. Moreover, a molded product containing many penetrating air spaces, such as a compact pressed at a pressure of not higher than 1.5 GPa, tends to be unsuitable for high-temperature applications because, when exposed to a temperature of at least 50°C for a long time, it may be oxidized and degraded or become extremely fragile, resulting in deteriorated impact resistance. Thus, the amount of the resin in the molded product for these applications is preferably at least 0.1% by mass but not more than 95% by mass, more preferably at least 0.5% by mass but not more than 50% by mass, still more preferably at least 1% by mass but not more than 15% by mass.

The resin compound for the bonded magnetic material may be prepared, for example, by mixing and/or kneading an α-Fe-containing rare earth-iron-nitrogen-based magnetic powder and a resin using a kneading machine at a temperature of at least 180°C but not higher than 300°C. For example, the α-Fe-containing rare earth-iron-nitrogen-based magnetic powder and the resin may be mixed using a mixer and then kneaded and extruded using a twin-screw extruder into a strand, which may then be cooled in the air and cut into a size of several millimeters using a pelletizer, thereby obtaining pellets of the resin compound for the bonded magnetic material according to the present embodiment.

The resin compound may be molded using an appropriate molding machine to produce the bonded magnetic material according to the present embodiment. Specifically, for example, the resin compound may be melted in the barrel of the molding machine and then injection-molded in the mold to which a magnetic field is applied to align the easy axes of magnetization (orientation step), thereby obtaining a magnetic field orientation-molded bonded magnetic material. Moreover, a bonded magnetic material sheet for magnetic field amplification or a bonded magnetic material sheet for hyper-high frequency absorption may be prepared by calendering or hot-pressing the pellets of the resin compound. The sheet may be rolled to a thickness of at least 20 µm but not more than 200 µm to produce a magnetic material for magnetic field amplification having a high real part of the relative permeability, which may be suitably used as, for example, a molded magnetic material sheet for magnetic field amplification for RFID tags and may be used as a molded magnetic material sheet for hyper-high frequency absorption for mobile devices.

### Magnetic material for hyper-high frequency absorption

A magnetic material for hyper-high frequency absorption according to the present embodiment is characterized by including an α-Fe-containing rare earth-iron-nitrogen-based magnetic powder. The magnetic material including the α-Fe-containing rare earth-iron-nitrogen-based magnetic powder can have an imaginary part µ" of the relative permeability that is higher than 0 in a frequency range of at least 1 GHz but not higher than 0.11 THz and may have good absorption characteristics with a µ" value of at least 0.8 in a frequency range of at least 1 GHz but not higher than 10 GHz.

The α-Fe-containing rare earth-iron-nitrogen-based magnetic powder preferably has an average particle size of at least 0.1 µm but not more than 10 µm because, as described above, the relative permeability of a powder of at least 3 µm tends to decrease in a hyper-high frequency range of at least 1 GHz due to the skin effect, and therefore the powder particle size should be at least 0.1 µm, if possible. Also, direct contact between the magnetic particles should be avoided as much as possible. For example, if a rare earth-iron-nitrogen-based magnetic powder of 30 µm is ground to a size of not more than 5 µm for use in a hyper-high frequency magnetic material, the particles of the magnetic powder may come into contact with each other to be electrically connected during molding, and the electrically connected aggregates may have an average size of 30 µm. In this case, the effect of the particle size on high-frequency characteristics will be equal to that obtained when the unground powder is used, thus losing the purpose of grinding. In particular, in the preparation of a magnetic sheet, which often uses a molding method such as hot pressing or calendering in which heat and pressure are simultaneously applied, it is preferred that an insulating film such as a phosphorus compound is firmly adhered to the magnetic particle surface so that the magnetic particles are electrically insulated from each other even if the magnetic particles aggregate in the molded product matrix. A high frequency magnetic material having high density and high relative permeability can be produced by coating the surface of the magnetic powder, which easily aggregates, with a fine and moderately soft phosphorus compound, which is not as hard as ferrite or oxides of transition metals, and then applying heat and pressure simultaneously.

The magnetic material for hyper-high frequency absorption according to the present embodiment characteristically has a high imaginary part µ" of the relative permeability even at hyper-high frequencies. For example, the imaginary part µ" of the relative permeability at a frequency of at least 1 GHz but lower than 20 GHz is preferably at least 0.2, more preferably at least 0.3. Moreover, the imaginary part µ" of the relative permeability at a frequency of at least 20 GHz but not higher than 1 THz is preferably at least 0.01, more preferably at least 0.1. Moreover, for example, the magnetic material for hyper-high frequency absorption according to the present embodiment may have an imaginary part µ" of the relative permeability at a frequency of 10 GHz that is at least 0.3, preferably at least 0.5, more preferably at least 0.7, still more preferably at least 0.9. The magnetic material for hyper-high frequency absorption according to the present embodiment may have an imaginary part µ" of the relative permeability at a frequency of 10 GHz that is not more than 5 or not more than 4. Moreover, for example, the magnetic material for hyper-high frequency absorption according to the present embodiment may have an imaginary part µ" of the relative permeability at a frequency of 0.11 THz that is at least 0.01, preferably at least 0.02, more preferably at least 0.05, still more preferably at least 0.1. The magnetic material for hyper-high frequency absorption according to the present embodiment may have an imaginary part µ" of the relative permeability at a frequency of 0.11 THz that is not more than 2 or not more than 1.5. Additionally, for example, the magnetic material for hyper-high frequency absorption according to the present embodiment preferably has a ratio of the imaginary part µ" of the relative permeability at a frequency of 0.11 THz to the imaginary part µ" of the relative permeability at a frequency of 10 GHz that is at least 0.01, more preferably at least 0.1. The magnetic material for hyper-high frequency absorption according to the present embodiment preferably has a ratio of the imaginary part µ" of the relative permeability at a frequency of 0.11 THz to the imaginary part µ" of the relative permeability at a frequency of 10 GHz that is not higher than 5, more preferably not higher than 1. When the magnetic material for hyper-high frequency absorption has a ratio of the imaginary part µ" of the relative permeability at a frequency of 0.11 THz to the imaginary part µ" of the relative permeability at a frequency of 10 GHz within the above range, the magnetic material can exhibit higher absorption characteristics in a broad frequency band.

The magnetic material for hyper-high frequency absorption according to the present embodiment containing the α-Fe-containing rare earth-iron-nitrogen-based magnetic powder can absorb hyper-high frequencies in a very broad frequency band of 1 GHz to 1 THz, and is distinct from magnetic materials which have low relative permeability in a narrow frequency bandwidth of about 10 GHz, such as uniaxial magnetocrystalline anisotropic materials (e.g., hexagonal ferrite, boride, and epsilon iron oxide) which are expected to be used at such hyper-high frequencies. The presence of a phosphorus compound with high electrical resistivity in the magnetic powder is a key feature for planar magnetocrystalline anisotropic materials which have a lower electrical resistivity than oxide materials but have a higher resistance than metal materials and maintain the high-frequency characteristics at up to 1 THz.

Examples of more specific applications of the magnetic material for hyper-high frequency absorption include mobile communication equipment, mobile phone small base stations, and cloud base stations for 5th generation mobile communication systems (5G), 5th generation plus mobile communication systems (5G+), and 6th generation mobile communication systems (6G); components for absorbing hyper-high frequency signals and spurious signals for their infrastructure equipment such as apparatuses, devices, and antennas; components for absorbing hyper-high frequency signals and spurious signals for apparatuses and devices used in intelligent transport systems (ITS), wireless high-definition multimedia interface (HDMI) (registered trademark), wireless local area network (LAN), satellite broadcasting (Ka-band), etc.; and electromagnetic noise absorbing components for removing mainly the second to seventh harmonics in personal computers.

The magnetic material for hyper-high frequency absorption according to the present embodiment may contain a resin. The composite material of the magnetic material and the resin is referred to as the bonded magnetic material. The resin in the bonded magnetic material may be either a thermosetting resin or a thermoplastic resin. Examples of the thermoplastic resin include polyphenylene sulfides (PPS), polyether ether ketones (PEEK), liquid crystal polymers (LCP), polyamides (PA), polypropylenes (PP), polyethylenes (PE), and thermoplastic elastomers. Examples of the thermosetting resin include epoxy resins, phenolic resins, urea resins, melamine resins, guanamine resins, unsaturated polyester resins, vinyl ester resins, diallyl phthalate resins, polyurethane resins, silicone resins, polyimide resins, alkyd resins, furan resins, dicyclopentadiene resins, acrylic resins, allyl carbonate resins, and thermosetting elastomers commonly called rubbers.

The amount of the resin in the bonded magnetic material is preferably at least 0.1% by mass but not more than 95% by mass. When the amount of the resin component is at least 0.1% by mass, impact resistance can be further improved. When the amount is not more than 95% by mass, a drastic decrease in relative permeability or magnetization can be reduced. Further, in applications which require the bonded magnetic material according to the present embodiment to have high relative permeability as well as impact resistance, the amount is more preferably in the range of at least 0.5% by mass but not more than 50% by mass for the reason described above. In applications such as high frequency circuit transformers with particularly good efficiency, the amount is still more preferably in the range of at least 1% by mass but not more than 15% by mass. To provide a magnetic material for magnetic field amplification according to the present embodiment with a particularly high real part of the relative permeability or a hyper-high frequency absorbing material with particularly good absorption characteristics, the amount is also preferably not more than 15% by mass, although the amount may vary more or less depending on the application. A non-sinter-hardened molded product containing no resin, for example, a compact prepared with an auxiliary agent such as a volatile organic solvent, is very fragile and is extremely difficult to apply to, for example, a magnetic material for magnetic field amplification such as a wireless power transfer coil or an inductor magnetic core, to which a load is applied, or a hyper-high frequency absorbing material mounted on a 5G+ or 6G mobile device which is frequently carried and often subjected to impact. Moreover, a molded product containing many penetrating air spaces, such as a compact pressed at a pressure of not higher than 1.5 GPa, tends to be unsuitable for high-temperature applications because, when exposed to a temperature of at least 50°C for a long time, it may be oxidized and degraded or become extremely fragile, resulting in deteriorated impact resistance. Thus, the amount of the resin in the molded product for these applications is preferably at least 0.1% by mass but not more than 95% by mass, more preferably at least 0.5% by mass but not more than 50% by mass, still more preferably at least 1% by mass but not more than 15% by mass.

The resin compound for the bonded magnetic material may be prepared, for example, by mixing and/or kneading a combination of a phosphorus compound, an α-Fe-containing rare earth-iron-nitrogen-based magnetic powder, and a resin, or a combination of an α-Fe-containing rare earth-iron-nitrogen-based magnetic powder and a resin using a kneading machine at a temperature of at least 180°C but not higher than 300°C. For example, the α-Fe-containing rare earth-iron-nitrogen-based magnetic powder and the resin may be mixed using a mixer and then kneaded and extruded using a twin-screw extruder into a strand, which may then be cooled in the air and cut into a size of several millimeters using a pelletizer, thereby obtaining pellets of the resin compound for the bonded magnetic material according to the present embodiment.

The resin compound may be molded using an appropriate molding machine to produce the bonded magnetic material according to the present embodiment. Specifically, for example, the resin compound may be melted in the barrel of the molding machine and then injection-molded in the mold to which a magnetic field is applied to align the easy axes of magnetization (orientation step), thereby obtaining a magnetic field orientation-molded bonded magnetic material. Moreover, a bonded magnetic material sheet for magnetic field amplification or a bonded magnetic material sheet for hyper-high frequency absorption may be prepared by calendering or hot pressing the pellets of the resin compound. The sheet may be rolled to a thickness of at least 20 µm but not more than 200 µm to produce a magnetic material for magnetic field amplification having a high real part of the relative permeability, which may be suitably used as, for example, a molded magnetic material sheet for magnetic field amplification for RFID tags and may be used as a molded magnetic material sheet for hyper-high frequency absorption for mobile devices.

### Method of producing α-Fe-containing rare earth-iron-nitrogen-based magnetic powder

A method of producing an α-Fe-containing rare earth-iron-nitrogen-based magnetic powder according to the present embodiment includes: performing a phosphorus treatment including adding an inorganic acid to a slurry containing: a rare earth-iron-nitrogen-based magnetic powder containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of the total R content; water; and a phosphorus-containing substance, to form a phosphorus compound coating portion on the rare earth-iron-nitrogen-based magnetic powder, thereby obtaining a rare earth-iron-nitrogen-based magnetic powder having the phosphorus compound coating portion; and performing an oxidation including heat-treating the rare earth-iron-nitrogen-based magnetic powder having the phosphorus compound coating portion at a temperature of at least 350°C but not higher than 600°C in an oxygen-containing atmosphere.

### Phosphorus treatment step

In the phosphorus treatment step, an inorganic acid may be added to a slurry that contains a rare earth-iron-nitrogen-based magnetic powder containing R, Fe, and N, water, and a phosphorus-containing substance to form a rare earth-iron-nitrogen-based magnetic powder having a phosphorus compound coating portion. The rare earth-iron-nitrogen-based magnetic powder having a phosphorus compound coating portion may be formed by reacting the metal component (for example, iron, neodymium, etc.) in the rare earth-iron-nitrogen-based magnetic powder with the phosphorus component (for example, phosphoric acid) in the phosphorus-containing substance to precipitate a phosphorus compound (for example, iron phosphate, neodymium phosphate, etc.). Moreover, the rare earth-iron-nitrogen-based magnetic powder having a phosphorus compound coating portion is preferably formed by precipitating the phosphorus compound on the surface of the rare earth-iron-nitrogen-based magnetic powder so that it coats at least a part of the surface of the rare earth-iron-nitrogen-based magnetic powder (such coating is referred to as "phosphorus compound coating", and the portion formed by such coating is referred to as "phosphorus compound coating portion"). According to the present embodiment, adding an inorganic acid to adjust the pH of the slurry can increase the amount of the precipitated phosphorus compound compared to when no inorganic acid is added. Thus, a phosphorus compound-coated rare earth-iron-nitrogen-based magnetic powder can be obtained in which the thickness of the coating portion (also referred to as film thickness) is increased, and therefore the tan δ and phase angle θ are improved and the magnetic field amplification characteristics are improved. Moreover, according to the present embodiment, the use of water as a solvent allows the precipitated phosphorus compound such as phosphate to have a smaller particle size than that when using an organic solvent. Thus, the resulting rare earth-iron-nitrogen-based magnetic powder has a dense phosphorus compound coating portion and tends to provide good efficiency in a high frequency range or good absorption characteristics in a hyper-high frequency range.

The slurry that contains a rare earth-iron-nitrogen-based magnetic powder containing R, Fe, and N, water, and a phosphorus-containing substance can be prepared by any method, such as by mixing a rare earth-iron-nitrogen-based magnetic powder with a phosphorus-containing substance solution containing a phosphorus-containing substance and water as a solvent. The amount of the rare earth-iron-nitrogen-based magnetic powder in the slurry is preferably at least 1% by mass but not more than 50% by mass. In view of productivity, the amount is more preferably at least 5% by mass but not more than 20% by mass. The amount of the phosphorus-containing substance in the slurry is not limited. When the phosphorus-containing substance is phosphoric acid and consists only of hydrogen and the phosphate component (PO₄), the amount of the phosphorus-containing substance, calculated as PO₄, is at least 0.01% by mass but not more than 10% by mass, for example. In view of reactivity between the metal component and the phosphate component and productivity, the amount is preferably at least 0.05% by mass but not more than 5% by mass.

Examples of the phosphorus-containing substance include phosphorus alone and compositions thereof; phosphate compounds such as orthophosphoric acid; heteropoly acid compounds such as phosphotungstic acid and phosphomolybdic acid; salts of phosphorus-containing acid compounds such as phosphate compounds or heteropoly acid compounds and metal ions or ammonium ions; organic phosphorus compounds such as phosphate esters, phosphite esters, and phosphine oxides; and phosphorus-containing metals such as iron phosphide, phosphor bronze, Fe-B-P-Cu based alloys, and Fe-Nb-B-P based alloys.

When the phosphorus-containing substance is a phosphate compound, an aqueous phosphate solution may be prepared by mixing the phosphate compound with water. Examples of the phosphate compound include orthophosphoric acid, sodium dihydrogen phosphate, sodium monohydrogen phosphate, ammonium dihydrogen phosphate, ammonium monohydrogen phosphate, zinc phosphate, calcium phosphate, and other phosphates, hypophosphorous acid, hypophosphites, pyrophosphoric acid, polyphosphoric acid, and other inorganic phosphoric acids, and organic phosphoric acids. These may be used alone or in combinations of two or more. To improve the water resistance and corrosion resistance of the coating portion and the magnetic properties of the magnetic powder, additives may also be used, including, for example, oxoacid salts such as molybdates, tungstates, vanadates, and chromates; oxidizing agents such as sodium nitrate and sodium nitrite; and chelating agents such as EDTA. In view of reaction control and coating amount control, phosphate compounds including inorganic phosphoric acids such as orthophosphoric acid, pyrophosphoric acid, and polyphosphoric acid, and phosphates of these inorganic phosphoric acids with Na, Ca, Pb, Zn, Fe, Y, Ce, Pr, Nd, Gd, Tb, Dy, Ho, Er, Tm, Lu, Sm, ammonium, etc. are preferred among the phosphorus-containing substances.

The phosphate concentration (calculated as PO₄) in the aqueous phosphate solution is preferably at least 5% by mass but not more than 50% by mass. In view of the solubility and storage stability of the phosphate compound and ease of chemical conversion treatment, the phosphate concentration is more preferably at least 10% by mass but not more than 30% by mass. The pH of the aqueous phosphate solution is preferably at least 1 but not higher than 4.5. In order to facilitate control of the precipitation rate of the phosphate, the pH is more preferably at least 1.5 but not higher than 4. The pH may be adjusted using dilute hydrochloric acid, dilute sulfuric acid, or the like.

In the phosphorus treatment step, an inorganic acid may be added to make the slurry acidic. The pH is preferably adjusted to be at least 1 but not higher than 4.5, more preferably at least 1.6 but not higher than 3.9, still more preferably at least 2 but not higher than 3. If the pH is lower than 1, aggregation of the rare earth-iron-nitrogen-based magnetic powder particles tends to occur starting from the locally highly precipitated phosphorus compound, resulting in deteriorated tan δ and phase angle θ in a high frequency range and lower µ" in a hyper-high frequency range. If the pH is higher than 4.5, the amount of the precipitated phosphorus compound such as phosphate tends to decrease, resulting in deteriorated tan δ and phase angle θ in a high frequency range and lower µ" in a hyper-high frequency range. Examples of the inorganic acid to be added include hydrochloric acid, nitric acid, sulfuric acid, boric acid, and hydrofluoric acid. In the phosphorus treatment step, the inorganic acid is preferably added as needed to adjust the pH within the above-described range. Although the inorganic acid is used in view of liquid waste disposal, an organic acid may be used together depending on the purpose. Examples of the organic acid include acetic acid, formic acid, and tartaric acid.

The phosphorus treatment step may be performed such that the resulting magnetic powder has a phosphorus content of at least 0.02% by mass. The phosphorus content of the magnetic powder obtained in the phosphorus treatment step is preferably at least 0.05% by mass, more preferably at least 0.15% by mass. The phosphorus content of the magnetic powder obtained in the phosphorus treatment step is preferably not higher than 4% by mass, more preferably not higher than 2% by mass, still more preferably not higher than 1% by mass. A phosphorus content of at least 0.02% by mass tends to further increase the effect of the phosphorus compound coating. A phosphorus content of not higher than 4% by mass tends to reduce the deterioration of the tan δ and phase angle θ in a high frequency range and the decrease in µ" in a hyper-high frequency range due to aggregation of the rare earth-iron-nitrogen-based magnetic powder particles starting from the phosphorus compound. To produce a magnetic material for magnetic field amplification having particularly good efficiency or a magnetic material for hyper-high frequency absorption having good absorption characteristics, the phosphorus content is preferably at least 0.15% by mass but not higher than 1% by mass. Here, the bulk phosphorus content of the total magnetic powder can be measured by ICP atomic emission spectroscopy (ICP-AES). Moreover, the local phosphorus contents of the magnetic powder phase and the phosphorus compound coating portion in the phosphorus compound-coated powder can be measured by STEM-EDX line analysis. Moreover, the atomic concentration of phosphorus (P) in the phosphorus compound coating portion is preferably at least 1 atm%, more preferably at least 5 atm%. The atomic concentration of P in the phosphorus compound coating portion may also be not more than 25 atm%, preferably not more than 15 atm%. If the phosphorus content of the phosphorus compound coating portion is less than 1 atm%, the phosphorus compound tends not to easily serve as an electric insulation. If the phosphorus content is more than 25 atm%, not only do the real part of the relative permeability in a high frequency range and the imaginary part of the relative permeability in a hyper-high frequency range tend to decrease, but the corrosion resistance performance also tends to decrease.

The phosphorus treatment step may be performed such that the phosphorus compound coating portion on the surface of the resulting magnetic powder has a region (R rich region) in which the atomic concentration of the rare earth (R) is higher than the atomic concentration of R in the base material rare earth (R)-iron-nitrogen-based magnetic powder. The atomic concentration of R in the R rich region may be at least 1.05 times, preferably at least 1.1 times, more preferably at least 1.2 times, still more preferably at least 1.5 times the atomic concentration of R in the core region of the α-Fe-containing rare earth-iron-nitrogen-based magnetic powder. The atomic concentration of R in the R rich region may also be, for example, not more than 4 times the atomic concentration of R in the core region of the α-Fe-containing rare earth-iron-nitrogen-based magnetic powder. Here, the R rich region includes a layer that shows a phosphorus (P) peak in STEM-EDX line analysis of the α-Fe-containing rare earth-iron-nitrogen-based magnetic powder. The R rich region may have a thickness of, for example, at least 1 nm, preferably of at least 3 nm but not more than 150 nm, more preferably at least 10 nm but not more than 100 nm, still more preferably at least 20 nm but not more than 80 nm. The atomic concentration (atm%) of each element in the R rich region can be determined by averaging the atomic concentrations of the element in the phosphorus compound coating portion measured by STEM-EDX line analysis. The rare earth element (R) may be Nd, for example. In this case, the Nd rich region may be evaluated based on the atomic concentration of Nd.

The adjustment of the pH of the slurry containing a rare earth-iron-nitrogen-based magnetic powder, water, and a phosphorus-containing substance within the range of at least 1 but not higher than 4.5 is preferably performed for at least 10 minutes. To reduce the thin parts of the coating portion, the adjustment is more preferably performed for at least 30 minutes. In the pH maintenance, the pH initially increases rapidly, and thus the inorganic acid for pH control needs to be introduced at short intervals. Then, as the coating proceeds, pH fluctuations gradually decrease, which allows the inorganic acid to be introduced at longer intervals. In this way, the end point of the reaction can be determined.

### Oxidation step after phosphorus treatment

The rare earth-iron-nitrogen-based magnetic powder having a phosphorus compound coating portion obtained in the phosphorus treatment step may be heat-treated at a temperature of at least 350°C but not higher than 600°C in an oxygen-containing atmosphere for oxidation. The oxidation treatment is considered to oxidize the surface of the rare earth-iron-nitrogen-based magnetic powder at the interface between the phosphorus compound coating portion and the rare earth-iron-nitrogen-based magnetic powder to form an α-Fe-containing region disproportionated to a nano α-Fe separate phase and an R oxynitride phase. As a result, a magnetic material for magnetic field amplification having improved tan δ and phase angle θ in a high frequency range or a magnetic material having absorption characteristics with high µ" in a hyper-high frequency range can be obtained.

Moreover, during the oxidation step after phosphorus treatment, an iron oxide may be released from the phosphorus compound coating portion and deposited on the surface of the α-Fe-containing rare earth-iron-nitrogen-based magnetic powder. This phenomenon is caused as follows: As the phosphorus compound coating portion transitions from eutectic or mixed crystals of an iron phosphate and/or M phosphate and a rare earth phosphate to a single rare earth phosphate phase during the "oxidation step after phosphorus treatment", the excess iron component may be discharged from the first coating portion. This iron oxide phase may include at least one selected from hematite, magnetite, ferrite, and wustite, although the iron oxide phase is often hematite. The iron oxide phase may also be bound to or released from the surface of the α-Fe-containing rare earth-iron-nitrogen-based magnetic powder. The iron oxide phase is preferably bound to the surface in applications requiring better efficiency and is preferably released from the surface in applications requiring higher µ'. The iron oxide phase may be released, for example, by mechanically knocking it off through tumbling or similar methods or by dissolving only the iron oxide phase through a reaction with an acid.

The oxidation treatment may be carried out by heat-treating the phosphorus-treated magnetic powder in an oxygen-containing atmosphere. The reaction atmosphere preferably contains oxygen in an inert gas such as nitrogen or argon. The oxygen concentration is preferably at least 3 vol% but not more than 21 vol%, more preferably at least 3.5 vol% but not more than 10 vol%. During the oxidation reaction, gas exchange is preferably performed at a flow rate of at least 2 L/min but not higher than 10 L/min per kg of the magnetic powder.

The temperature in the oxidation treatment is at least 350°C but not higher than 600°C, preferably at least 380°C but not higher than 550°C, more preferably at least 400°C but not higher than 500°C, still more preferably at least 420°C but not higher than 480°C. At lower than 350°C, the generation of the α-Fe containing region tends to be insufficient, resulting in a decrease in the real part of the relative permeability in a high frequency range. At higher than 600°C, the magnetic powder tends to excessively decompose. The duration of the reaction is preferably at least 3 hours but not longer than 10 hours.

The rare earth-iron-nitrogen-based magnetic powder in the core region is known to have a pyrolysis temperature of about 550 to 650°C. It is also known to be oxidatively degraded at 200°C or higher in an oxygen-containing atmosphere. In this context, it has not been known to serve as a good α-Fe-containing rare earth-iron-nitrogen-based magnetic material after being heated to a temperature close to the pyrolysis temperature in an oxygen-containing atmosphere. It is considered that when the phosphorus treatment according to the present disclosure is used to form a dense film on the rare earth-iron-nitrogen-based magnetic powder, and then heat treatment is performed in an oxygen-containing atmosphere, excessive pyrolysis of the core region can be prevented so that α-Fe can be to gradually separated and dispersed at the nanoscale from the matrix through a disproportionation reaction from the surface of the rare earth-iron-nitrogen-based magnetic powder beneath the phosphorus compound coating portion, thereby enabling the production of the α-Fe-containing rare earth-iron-nitrogen-based magnetic material according to the present invention. It was not at all expected that the magnetic material produced through such an unconventional process would have good efficiency and high µ'.

For example, the α-Fe-containing region is considered to be formed by the following mechanism. Oxygen may be gradually supplied via the phosphorus compound coating portion on the surface of the rare earth-iron-nitrogen powder and through the interface between the phosphorus compound coating portion and the rare earth-iron-nitrogen powder, so that a reaction between the rare earth-iron-nitrogen-based material and the oxygen (oxidation step) can slowly proceed at that surface and/or interface to allow the rare earth-iron-nitrogen-based material to be converted to a disproportionated layer including α-Fe and R oxynitride phases, thereby providing a unique "α-Fe-containing region" which is phase-separated at the nanoscale. Here, if the phosphorus compound coating portion is not present on the surface of the α-Fe-containing rare earth-iron-nitrogen-based magnetic powder of the present invention, the rare earth-iron-nitrogen-based magnetic powder will be simply oxidized to allow the nitrogen to dissipate into the atmosphere, thus causing the magnetic powder to undergo a rapid reaction compared to that in the present invention. As a result, the magnetic powder is transformed to a mixture of (1) α-Fe or an iron oxide and (2) a rare earth oxide. Since the (1) component is not lattice-matched with the (2) component, the mixture is likely to form a non-uniform phase without regular arrangement or orientation of α-Fe, unlike the α-Fe-containing region in the α-Fe-containing rare earth-iron-nitrogen-based magnetic material of the present invention.

### Silica treatment step

The magnetic powder obtained through the phosphorus treatment step and the oxidation step may optionally be subjected to a silica treatment. Forming a silica thin film on the magnetic powder can improve oxidation resistance. The silica thin film may be formed, for example, by mixing an alkyl silicate, the magnetic powder, and an alkali solution.

### Silane coupling treatment step

The silica-treated magnetic powder may be further treated with a silane coupling agent. When the magnetic powder provided with a silica thin film is subjected to a silane coupling treatment, a silane coupling agent film is formed on the silica thin film, which improves the magnetic properties of the magnetic powder as well as wettability between the magnetic powder and the resin and the strength of the molded product. Any silane coupling agent may be used and may be selected depending on the resin type. Examples of the silane coupling agent include γ-(2-aminoethyl)aminopropyltrimethoxysilane, γ-(2-aminoethyl)aminopropylmethyldimethoxysilane, γ-methacryloxypropyltrimethoxysilane, γ-methacryloxypropylmethyldimethoxysilane, N-β-(N-vinylbenzylaminoethyl)-γ-aminopropyltrimethoxysilane hydrochloride, γ-glycidoxypropyltrimethoxysilane, γ-mercaptopropyltrimethoxysilane, methyltrimethoxysilane, methyltriethoxysilane, vinyltriacetoxysilane, γ-chloropropyltrimethoxysilane, hexamethylenedisilazane, γ-anilinopropyltrimethoxysilane, vinyltrimethoxysilane, octadecyl[3-(trimethoxysilyl)propyl]ammonium chloride, γ-chloropropylmethyldimethoxysilane, γ-mercaptopropylmethyldimethoxysilane, methyltrichlorosilane, dimethyldichlorosilane, trimethylchlorosilane, vinyltrichlorosilane, vinyltris(β-methoxyethoxy)silane, vinyltriethoxysilane, β-(3,4-epoxycyclohexyl)ethyltrimethoxysilane, γ-glycidoxypropylmethyldiethoxysilane, N-β-(aminoethyl)-γ-aminopropyltrimethoxysilane, N-β-(aminoethyl)-γ-aminopropylmethyldimethoxysilane, γ-aminopropyltriethoxysilane, N-phenyl-γ-aminopropyltrimethoxysilane, ureidopropyltriethoxysilane, γ-isocyanatopropyltriethoxysilane, polyethoxydimethylsiloxane, polyethoxymethylsiloxane, bis(trimethoxysilylpropyl)amine, bis(3-triethoxysilylpropyl)tetrasulfane, γ-isocyanatopropyltrimethoxysilane, vinylmethyldimethoxysilane, 1,3,5-N-tris(3-trimethoxysilylpropyl)isocyanurate, t-butyl carbamate trialkoxysilanes, and N-(1,3-dimethylbutylidene)-3-(triethoxysilyl)-1-propaneamine. These silane coupling agents may be used alone or in combinations of two or more. The amount of the silane coupling agent added per 100 parts by mass of the magnetic powder is preferably at least 0.2 parts by mass but not more than 0.8 parts by mass, more preferably at least 0.25 parts by mass but not more than 0.6 parts by mass. If the amount is less than 0.2 parts by mass, the effect of the silane coupling agent tends to be small. If the amount is more than 0.8 parts by mass, the magnetic properties of the magnetic powder or molded product tend to decrease due to aggregation of the magnetic powder.

Moreover, the silica treatment step and/or silane coupling treatment step may be replaced or followed by subjecting the magnetic powder to a surface treatment with a coupling agent, examples of which include titanium coupling agents such as isopropyl triisostearoyl titanate, isopropyl tri(N-aminoethyl-aminoethyl)titanate, isopropyl tris(dioctylpyrophosphate)titanate, tetraisopropyl bis(dioctylphosphite)titanate, tetraisopropyl titanate, tetrabutyl titanate, tetraoctyl bis(ditridecylphosphite)titanate, isopropyl trioctanoyl titanate, isopropyl tridodecylbenzenesulfonyl titanate, isopropyl tri(dioctylphosphate)titanate, bis(dioctylpyrophosphate)ethylenetitanate, isopropyl dimethacryl isostearoyl titanate, tetra(2,2-diallyloxymethyl-1-butyl)bis(ditridecylphosphite)titanate, and isopropyl tricumyl phenyl titanate, aluminum coupling agents such as acetoalkoxyaluminum diisopropylate; zirconium coupling agents, chromium coupling agents, iron coupling agents, and tin coupling agents.
When the powder obtained through this treatment is used to prepare a bonded magnetic material, the affinity with the resin added may be improved, the dispersion and isolation of the α-Fe-containing rare earth-iron-nitrogen-based magnetic powder may become more significant, and higher electrical insulation between the powder particles may be provided, resulting in good efficiency in a high frequency range or good absorption characteristics in a hyper-high frequency range.

The magnetic powder obtained after the phosphorus treatment step, oxidation step, silica treatment step, or silane coupling treatment step may be filtered, dehydrated, and dried in a usual manner.

The real part of the relative permeability of the rare earth-iron-nitrogen-based magnetic powder can be improved by uniformizing the particle size distribution. The uniformization of the particle size distribution can be carried out by a general dry or wet classification method. The uniformization of the particle size distribution may be performed at any time before the phosphate treatment but after the phosphorus treatment step, oxidation step, silica treatment step, or silane coupling treatment step.

The rare earth-iron-nitrogen-based magnetic powder used in the production method according to the present embodiment contains R, Fe, and N, where R represents at least one selected from Y, Ce, Pr, Nd, Gd, Tb, Dy, Ho, Er, Tm, Lu, and Sm, and when R contains Sm, Sm constitutes less than 50 atm% of the total R content. R is at least one selected from Y, Ce, Pr, Nd, Gd, Tb, Dy, Ho, Er, Tm, Lu, and Sm, preferably from Nd, Y, Ce, Pr, Gd, and Dy from the standpoint of achieving stable material supply and high relative permeability, more preferably from Nd, Y, Ce, and Pr in view of the cost. Here, when R contains Sm, the Sm content is less than 50 atm%, preferably less than 20 atm% of the total R content. In particular, when the Nd or Pr content is at least 50 atm% of the total R content, a magnetic material with much higher relative permeability or a magnetic material with further improved tan δ and phase angle θ can be obtained. In view of the balance between oxidation resistance and cost, the Nd or Pr content is preferably at least 70 atm%. A NdFeN rare earth-iron-nitrogen-based magnetic powder with a Nd content of 100 atm% is particularly preferred because of its abundant resources, large absolute value of the magnetocrystalline anisotropy field (indicative of the magnitude of magnetic anisotropy), and high absorption performance at higher hyper-high frequencies.

The Fe content of the rare earth-iron-nitrogen-based magnetic powder is preferably at least 40 atm% but not higher than 87 atm%, more preferably at least 50 atm% but not higher than 85 atm%.

### EXAMPLES

The present disclosure is further specifically described with reference to, but not limited to, the following examples and other embodiments.

The evaluation methods performed in the examples are as described below.

### (1) Element content

The concentrations of P and Mo in the magnetic powder were measured by ICP atomic emission spectroscopy (ICP-AES, SPS3500, Hitachi High-Tech Science Corporation). The concentrations of O and N in the magnetic powder were measured with an oxygen and nitrogen analyzer (EMGA-820, HORIBA, Ltd.).

### (2) XRD, α-Fe peak intensity ratio, and full width at half maximum

The XRD pattern of the magnetic powder was measured with a powder X-ray crystal diffractometer (Rigaku Corporation, X-ray wavelength: CuKα). The measurement was performed under the conditions including an acceleration voltage of 40 kV and a tube current of 20 mA in the range of 10 < 2θ < 90 with a step width of 2θ = 0.02. The ratio (I)/(II) of the diffraction peak intensity (I) of the (110) plane of α-Fe to the peak intensity (II) of the strongest line of the rare earth-iron-nitrogen-based compound in the core region in the XRD diffraction pattern was calculated. With regard to the peaks of the (I) and (II) intensities, the peak near 2θ = 44° was taken as the (110) plane of α-Fe and the peak at 2θ = 41.5° was taken as the strongest line of the rare earth-iron-nitrogen-based compound. The full width at half maximum of the peak to be used in the Scherrer equation was determined from the peak of the (110) plane of α-Fe.

### (3) Average particle size

The average particle size of the magnetic powder was measured with a laser diffraction particle size distribution analyzer (MASTERSIZER 2000, MALVERN Inst.).

### (4) Measurement of complex relative permeability (1 MHz to 1 GHz)

The magnetic powder was mixed with an epoxy resin (thermosetting resin) such that the magnetic powder content was 97% by mass and then kneaded to prepare a resin compound. The resin compound was charged into a mold having an inner diameter of 3.1 mm and an outer diameter of 8 mm, molded at an applied pressure of 0.8 GPa, and then heat-cured at 150°C for two hours in vacuum to prepare a toroidal molded product. Using an impedance analyzer (HP4291B, Hewlett-Packard Company), the complex relative permeability of this sample in a frequency range of 1 MHz to 1 GHz was evaluated from the inductance determined using a single-turn inductor-type test fixture.

### (5) STEM-EDX analysis and TEM-ED analysis

The STEM analysis of the surface of the magnetic powder was performed as follows. First, the prepared magnetic powder was subjected to carbon coating followed by cross-sectioning and thin sectioning using a focused ion beam (FIB) to obtain a sample. The sample was measured with STEM (model No. Talos F200X, FEI, acceleration voltage: 200 kV) and STEM-EDX (system: model No. SuperX, FEI, detector: SDD detector, Bruker) attached to the STEM. Line analysis was performed with the step width described below from the exterior to the interior of the magnetic powder to observe continuous changes in the atomic concentrations of the structural elements. At that time, because a lot of carbon (C) from the resin used to prepare the cross-sectional sample might be detected at some measurement points, the atomic concentrations were calculated based on the total elements, excluding C. Moreover, the crystallinity and orientation of the α-Fe-containing region in the magnetic powder were evaluated using TEM-ED.

### (6) Measurement of complex relative permeability (1 GHz to 18 GHz)

The magnetic powder was mixed and kneaded with a polyamide elastomer (thermoplastic resin) such that the magnetic powder content was 91.7% by mass. Then, a resin sheet with a thickness of about 1 mm was prepared from the kneaded mixture using a hot press. A toroidal sample with an inner diameter of 3.04 mm and an outer diameter of 7 mm was cut out of the resin sheet. Using a network analyzer (N5290A, Keysight Technologies), the complex relative permeability of the sample in a frequency range of 1 to 18 GHz was evaluated from an S-parameters determined by the coaxial method. Production Example 1

A non-phosphorus-treated Nd₂Fe₁₇N₃ magnetic powder having an average particle size of about 15 µm was prepared from iron sulfate and neodymium sulfate as raw materials by a precipitation method as described below.

### Preparation of Nd-Fe sulfuric acid solution

An amount of 5.0 kg of FeSO₄·7H₂O was mixed and dissolved in 2.0 kg of pure water. Then, 0.45 kg of Nd₂O₃ and 0.70 kg of 70% sulfuric acid were added and stirred well until they were completely dissolved. Next, pure water was added to the resulting solution so that the final Fe and Nd concentrations were adjusted to 0.726 mol/L and 0.106 mol/L, respectively, to give a Nd-Fe sulfuric acid solution.

### Precipitation step

The entire amount of the prepared Nd-Fe sulfuric acid solution was added dropwise with stirring to 20 kg of pure water kept at a temperature of 40°C over 70 minutes from the start of the reaction, while 15% ammonia water was added dropwise to adjust the pH to 7 to 8. Thus, a slurry containing a Nd-Fe hydroxide was obtained. The slurry was washed with pure water by decantation, followed by solid-liquid separation to separate the hydroxide. The separated hydroxide was dried in an oven at 100°C for 10 hours.

### Oxidation step

The hydroxide obtained in the precipitation step was fired in the atmosphere at 1030°C for one hour and then cooled to obtain a red Nd-Fe oxide as a raw material powder.

### Pretreatment step

An amount of 100 g of the Nd-Fe oxide was put in a steel vessel to a thickness of 10 mm. The vessel was placed in a furnace, and the pressure was reduced to 100 Pa. Then, while introducing hydrogen gas, the temperature was increased to a pretreatment temperature of 850°C and maintained at this temperature for 15 hours to obtain a partial oxide as a black powder.

### Reduction step

An amount of 60 g of the partial oxide obtained in the pretreatment step was mixed with 19.2 g of metallic calcium having an average particle size of about 6 mm, and the mixture was placed in a furnace. After vacuum evacuation of the furnace, argon gas (Ar gas) was introduced. The temperature was increased to 1045°C and maintained for 45 minutes to obtain Fe-Nd alloy particles.

### Nitridation step

Subsequently, the temperature inside the furnace was lowered to 100°C, followed by vacuum evacuation. Then, while introducing nitrogen gas, the temperature was increased to 450°C and maintained at this temperature for 23 hours to obtain a magnetic particle-containing bulk product.

### Water washing step

The bulk product obtained in the nitridation step was introduced into 3 kg of pure water and stirred for 30 minutes. After allowing it to stand, the supernatant was drained by decantation. The introduction into pure water, stirring, and decantation were repeated 10 times. Then, 2.5 g of 99.9% acetic acid was introduced and stirred for 15 minutes. After allowing it to stand, the supernatant was drained by decantation. The introduction into pure water, stirring, and decantation were repeated twice, followed by dehydration, drying, and then mechanical crushing to obtain a Nd₂Fe₁₇N₃ magnetic powder (average particle size: about 15 µm).

### Comparative Example 1

The Nd₂Fe₁₇N₃ magnetic powder prepared in Production Example 1 was subjected to phosphorus treatment as follows. A phosphate treatment liquid was prepared by mixing 85% orthophosphoric acid, sodium dihydrogen phosphate, and sodium molybdate dihydrate at a mass ratio of 1:6:1, respectively, and adding pure water and dilute hydrochloric acid to adjust the pH and the PO₄ concentration to 2 and 20% by mass, respectively. The Nd-Fe-N-based magnetic powder obtained in the water washing step was stirred in dilute hydrochloric acid (water:hydrogen chloride = 1000 g:70 g) for one minute to remove the oxidized surface film and contaminants, followed by repeating draining and supplying water until the supernatant had a conductivity of not higher than 100 µS/cm. Thus, a slurry containing 10% by mass of the Nd-Fe-N-based anisotropic magnetic powder was obtained. Then, while stirring the slurry, 100 g of the prepared phosphate treatment liquid was entirely introduced into a treatment tank. Subsequently, 6% by mass hydrochloric acid was introduced as needed to control the pH of the phosphate treatment reaction slurry to fall within a range of 2.0 ± 0.1, which was maintained for 40 minutes. Then, the slurry was subjected to suction filtration, dehydration, and vacuum drying to obtain a Nd-Fe-N-based anisotropic magnetic powder having a phosphorus compound coating portion.

### Examples 1 to 4, Comparative Examples 2 and 3

An amount of 300 g of the Nd-Fe-N-based anisotropic magnetic powder having a phosphorus compound coating portion of Comparative Example 1 was gradually heated from room temperature in a gaseous mixture of nitrogen and air (oxygen concentration 4 vol%, 5 L/min) to perform heat treatment at the maximum temperature indicated in Table 1 for eight hours, thereby obtaining an oxidized rare earth-iron-nitrogen-based magnetic powder (average particle size: about 15 µm) of Example 1 or Example 2.

A Nd-Fe-N-based anisotropic magnetic powder having a phosphorus compound coating portion with an average particle size of about 13 µm was prepared as in Comparative Example 1 and subjected to heat treatment at the maximum temperature indicated in Table 1 for eight hours as in Examples 1 and 2, thereby obtaining an oxidized rare earth-iron-nitrogen-based magnetic powder (average particle size: shown in Table 1) of Example 3 or 4 or Comparative Example 2 or 3.

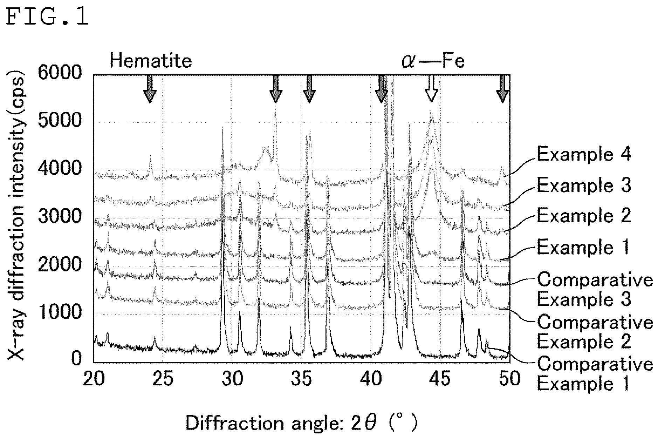

The P, Mo, O and N element contents and the α-Fe peak intensity ratio of the magnetic powders prepared in Examples 1 to 4 and Comparative Examples 1 to 3 were measured by the above-described methods. Table 1 shows the measurement results together with the oxidation temperatures after phosphorus treatment and the average particle sizes. Moreover, FIG. 1 shows the XRD patterns of the magnetic powders prepared in Examples 1 to 4 and Comparative Examples 1 to 3.

As shown in Table 1, the oxygen (O) contents of the magnetic powders with treatment temperatures up to 320°C are little varied. This indicates that the presence of the phosphorus compound coating portion inhibits oxidation of the magnetic powder. Moreover, at treatment temperatures of 350°C or higher, the oxygen content gradually increases, and at the same time, the intensity of a broad peak of α-Fe starts to increase. This indicates that an R oxynitride phase and nanoscale α-Fe, and therefore an α-Fe-containing region, start to be formed at a treatment temperature of 350°C or higher. Further, the diffraction peak of hematite starts to grow at 380°C, and thus it is considered that an iron oxide layer may be formed outside the phosphorus compound coating portion.

**Table 1**

| | Oxidation temperature after phosphorus treatment | Element content | | | | α-Fe peak intensity ratio (I)/ (II) | Average particle size (µm) |
|---|---|---|---|---|---|---|---|
| | | P (ppm) | Mo (ppm) | O (% by mass) | N (% by mass) | | |
| Comparative Example 1 | No heat treatment | 1500 | 1400 | 0.65 | 2.51 | 0 | 15 |
| Comparative Example 2 | 280°C | 2400 | 540 | 0.98 | 2.68 | 0 | 15 |
| Comparative Example 3 | 320°C | 2400 | 550 | 0.84 | 2.65 | 0 | 15 |
| Example 1 | 380°C | 2500 | 560 | 1.33 | 2.63 | 0.03 | 15 |
| Example 2 | 450°C | 2400 | 550 | 2.78 | 2.50 | 0.43 | 15 |
| Example 3 | 475°C | 3900 | 700 | 4.33 | 2.37 | 0.73 | 13 |
| Example 4 | 500°C | 4000 | 680 | 8.32 | 1.88 | 2.12 | 13 |

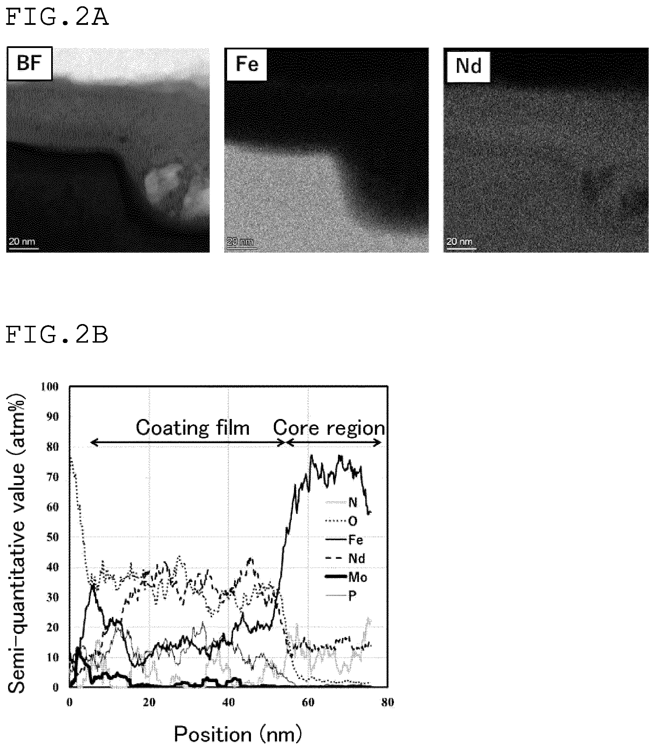

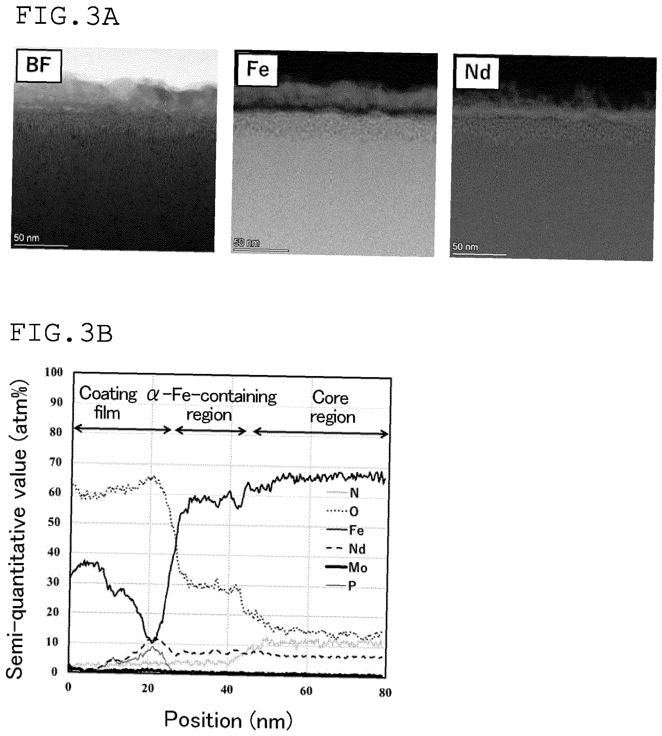

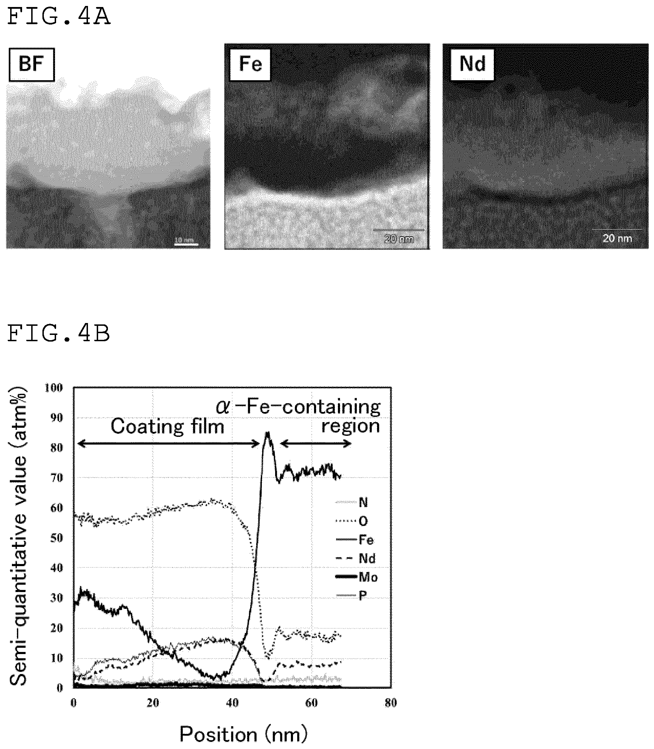

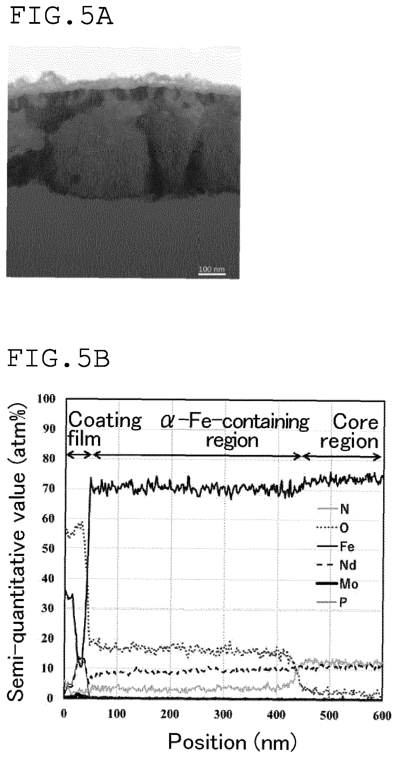

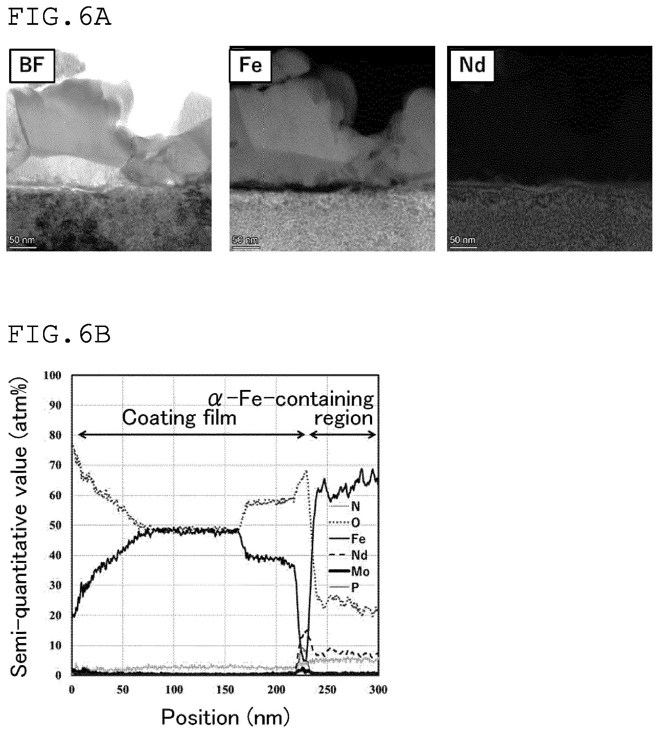

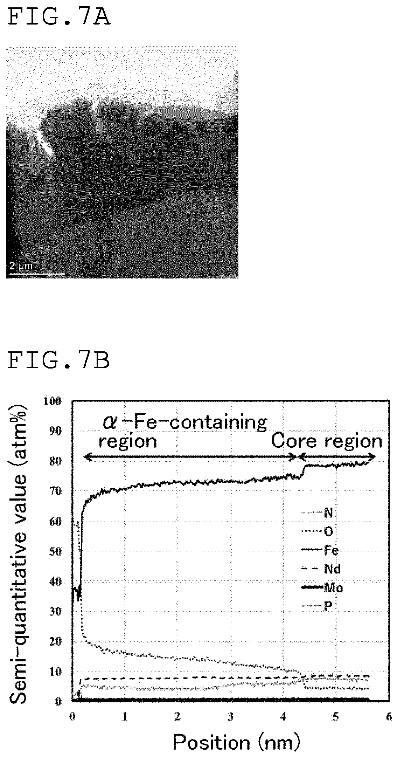

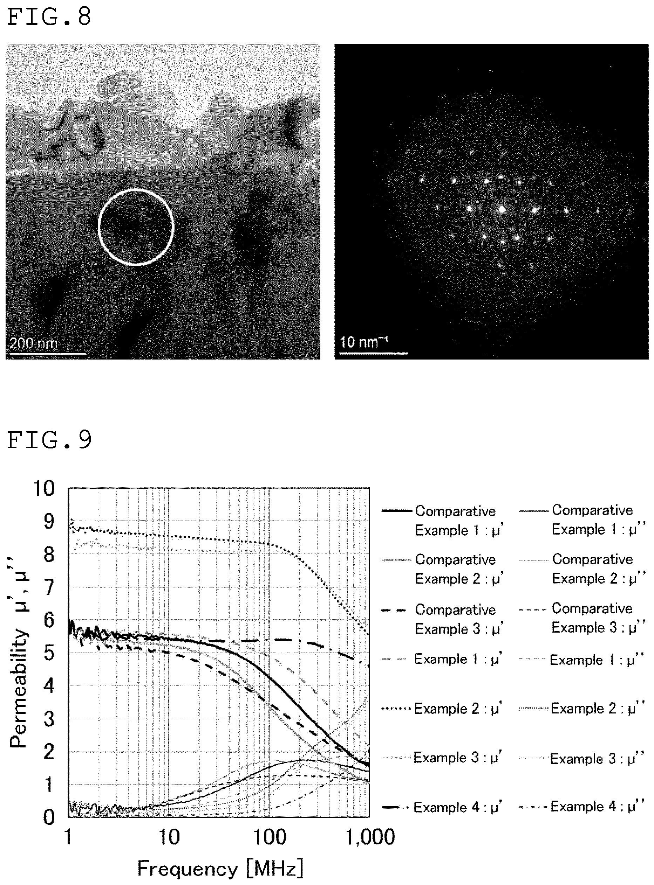

STEM, EDX, TEM, and ED images near the surface of the magnetic powders of Comparative Example 1 (FIGS. 2A and 2B), Example 1 (FIGS. 3A and 3B), Example 2 (FIGS. 4A and 4B, FIGS. 5A and 5B), and Example 4 (FIGS. 6A and 6B, FIGS. 7A and 7B, FIG. 8) were observed. Only Example 2 was observed using STEM (model No. JEM-F200, JEOL, acceleration voltage: 200 kV) and STEM-EDX (system: model No. SD100HR, JEOL, detector: dry SD detector available from JEOL) attached to the STEM. The STEM, EDX, and TEM images were observed at the following magnifications: 530900x (FIG. 2A), 640000x (FIG. 3A), 2500000x (FIG. 4A), 250000x (FIG. 5A), 320000x (FIG. 6A), 14000x (FIG. 7A), and 74000x (FIG. 8). FIGS. 2 to 7 show the obtained STEM images, STEM-EDX images, and line analysis results. The step widths in the respective line analysis results are as follows: 0.18 nm (FIG. 2B), 0.18 nm (FIG. 3B), 0.16 nm (FIG. 4B), 1.6 nm (FIG. 5B), 0.36 nm (FIG. 6B), and 8.2 nm (FIG. 7B).

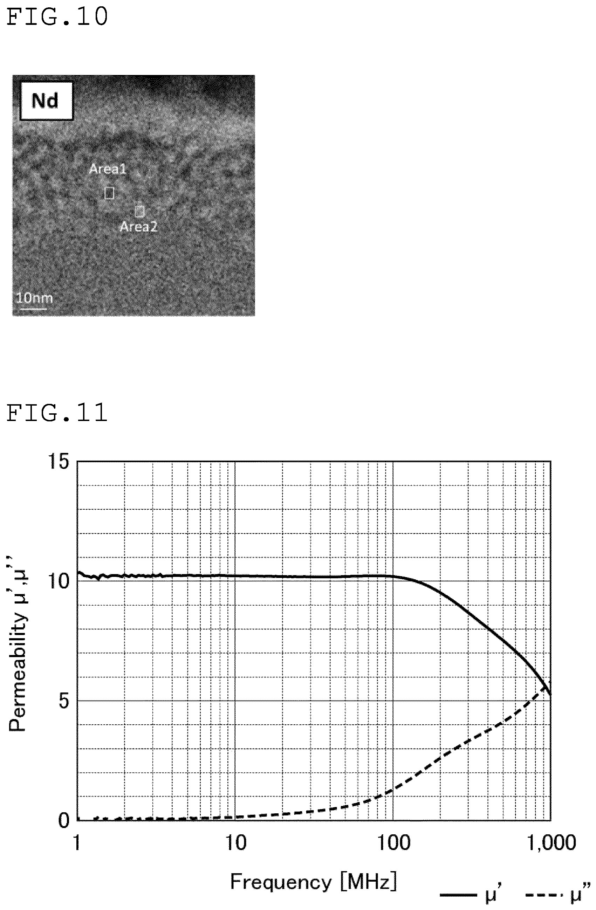

From the results in FIG. 2A (Comparative Example 1), it is considered that only the base material core region is present inside the phosphorus compound coating portion. Moreover, in FIG. 3A (Example 1), FIG. 4A (Example 2), and FIG. 6A (Example 4), the formation of a phase containing nanoscale Fe and Nd inside the coating film was observed. When focusing on Fe or Nd in the STEM-EDX image in FIG. 4A, a sea-island structure contrast was observed in the α-Fe-containing region. Then, a measurement of the elemental ratio around the "sea" and "island" regions confirmed that the area around the "island" region had a higher Fe content ratio and lower Nd and O content ratios than the area around the "sea" region. Moreover, FIG. 10 shows an enlarged view of the α-Fe-containing region in FIG. 3A. Table 2 shows the atomic concentrations of N, O, Fe, and Nd in Area 1 and Area 2 in FIG. 10.

**Table 2**

| | Element content ratio (atm%) | | | |
|---|---|---|---|---|
| | N | O | Fe | Nd |
| Area 1 | 3.1 | 22.9 | 69.2 | 4.8 |
| Area 2 | 6.9 | 33.6 | 48.9 | 10.7 |

As shown in Table 2, larger amounts of Nd, N, and O were detected in Area 2 than in Area 1, while a larger amount of Fe was detected in Area 1. From these results and the XRD results, the Fe rich layer is presumed to be an α-Fe phase, and the Nd rich region is presumed to be a phase containing neodymium oxide, neodymium nitride, or neodymium oxynitride. Here, probably because of averaging of the information in the depth direction, which corresponds to the thickness (about 100 nm) of the thin sectioned sample, as well as scattering of electron beams in the sample, N, O, and Nd were also detected in the α-Fe phase, and Fe was also detected in the phase containing neodymium oxide, neodymium nitride, or neodymium oxynitride. Thus, also in the structure in FIG. 3A, it is presumed that a larger amount of oxygen, etc. is present in the Nd region than in the Fe region, and therefore Area 1 is present as an "island region" in the form of an R oxide phase (or R oxynitride phase) and, at the same time, Area 2 is present as a "sea" region containing a large amount of Fe. From FIG. 3B (Example 1), FIG. 4B (Example 2), and FIG. 6B (Example 4), it is considered that a phosphorus compound and an iron oxide layer are present in the coating films in Examples 1, 2, and 4.

From the results of the STEM-EDX analysis and the XRD patterns, the nanoscale Fe is presumed to be α-Fe. From the STEM-EDX and line analysis results, the Nd-containing phase is presumed to contain O and N (R oxynitride phase). Further, the nanoscale α-Fe and the R oxynitride phase were larger in Example 4. The thickness of the α-Fe-containing region was about 20 nm (Example 1), about 400 nm (Example 2), or about 4 µm (Example 4). Moreover, in the results of line analysis near the surface and those of the entire α-Fe-containing region in Example 2 and Example 4 (FIG. 4B, FIG. 5B, FIG. 6B, and FIG. 7B), the profiles near the outermost surface and those of the interface between the phases are different, but this is due to the differences in the step width of the line analysis. Moreover, in the XRD pattern of Example 4, broad peaks, presumably from NdFeO₃ having a perovskite structure, were observed around 2θ = 23° and 33°.

FIG. 8 shows a STEM image and an electron diffraction pattern of the α-Fe-containing region in Example 4. The right figure in FIG. 8 shows the electron diffraction pattern of α-Fe with [111] incidence within the 200 nm diameter circle shown in the left figure in FIG. 8. The bright diffraction points in the form of hexagon at an inner part of the right figure in FIG. 8 are attributed to the {110} of α-Fe. EDX image analysis (see FIG. 6A) suggests that the α-Fe phases in this part have a size of not more than 10 nm and are homogeneously arranged. As clear spots are observed in the left figure in FIG. 8, the α-Fe phases are considered to be arranged and oriented in one direction within the 200 nm diameter region. However, other satellites with low brightness are also observed at the origin and between the diffraction points of α-Fe {110} and {220} at equal intervals. They are considered to be diffraction points derived from an R oxynitride phase that is lattice-matched with α-Fe and surrounds each α-Fe phase, indicating that the α-Fe-containing region within the 200 nm region is crystalized, with the α-Fe phases and the R oxynitride matrix phase being arranged and oriented. The formation of such an ordered structure is considered to result in a magnetic powder that achieves both high-level electric insulation and magnetic coupling.

Moreover, the crystallite size of each magnetic powder was calculated from the peak of the (110) plane of α-Fe in the XRD pattern in FIG. 1 according to the Scherrer equation (6.8 nm (Example 1), 8.7 nm (Example 2), 8.9 nm (Example 3), and 8.6 nm (Example 4)). The calculated sizes are larger than the particle sizes observed by STEM-EDX, probably because the diffraction peaks could appear as crystals including not only a α-Fe phase but also a partially lattice-matched rare earth oxide.

Samples for measuring complex relative permeability at 1 MHz to 1 GHz were prepared from the magnetic powders of Comparative Examples 1 to 3 and Examples 1 to 4 by the above-described method (toroidal molded products (amount of resin added: 6% by mass) with the following densities: 5.85 (Comparative Example 1), 5.38 (Comparative Example 2), 5.54 (Comparative Example 3), 5.66 (Example 1), 5.27 (Example 2), 5.40 (Example 3), and 4.97 (Example 4)). The frequency dependence of the complex relative permeabilities at 1 MHz to 100 MHz was measured by the above-described method, and FIG. 9 shows the results. Table 3 shows the evaluation results of the high-frequency characteristics.

The ratio θ₁/θ₂ was lower than 0.7 in Comparative Examples 1 to 3, while the ratio θ₁/θ₂ was at least 0.8 in Examples 1 to 4. This is probably because an α-Fe-containing region could be formed in the oxidation step after phosphorus treatment, thereby increasing the electric insulation. Moreover, the µ' was improved in Example 2 and Example 3 although their densities were lower than those of Comparative Examples 1 to 3. This is probably because an α-Fe-containing region could be formed in the oxidation step after phosphorus treatment, thereby increasing the magnetic coupling effect. Further, Examples 1 to 4 had low loss with a θ value at 13 MHz of at least 85° (tan δ of not more than 0.0875), and therefore can be suitably used as an antenna material for RFID. In contrast, Comparative Examples 1 to 3 had high loss with a θ value of less than 85° (tan δ of more than 0.0875) and therefore low efficiency.

**Table 3**

| | µ' at 10 MHz | θ | | | | | θ₁/θ₂ |
|---|---|---|---|---|---|---|---|
| | | 2 MHz (θ₂) | 13 MHz | 20 MHz | 30 MHz | 100 MHz (θ₁) | |
| Comparative Example 1 | 5.56 | 83.1 | 75.5 | 70.5 | 65.3 | 50.3 | 0.61 |
| Comparative Example 2 | 5.19 | 89.4 | 82.2 | 78.7 | 74.2 | 54.0 | 0.60 |
| Comparative Example 3 | 5.13 | 88.9 | 80.9 | 77.1 | 73.1 | 58.8 | 0.66 |
| Example 1 | 5.55 | 90.3 | 86.4 | 85.0 | 83.2 | 73.6 | 0.81 |
| Example 2 | 8.56 | 87.7 | 88.0 | 87.6 | 87.0 | 82.4 | 0.94 |
| Example 3 | 8.16 | 90.0 | 88.6 | 88.4 | 87.9 | 84.3 | 0.94 |
| Example 4 | 5.38 | 89.1 | 89.2 | 88.9 | 88.8 | 86.7 | 0.97 |

### Example 5 and Comparative Example 4

A magnetic powder obtained as in Comparative Example 1 was classified to prepare a phosphorus-treated rare earth-iron-nitrogen-based magnetic powder having an average particle size of about 4 µm (Comparative Example 4). A magnetic powder obtained as in Example 1 was also classified to prepare an α-Fe-containing rare earth-iron-nitrogen-based magnetic powder having an average particle size of about 4 µm (Example 5). The average particle size was measured with a laser diffraction particle size distribution analyzer (Japan Laser Corporation, HELOS&RODOS) in Comparative Example 4 and Example 5. Each magnetic powder was used to prepare a resin sheet having a density of about 5.0 g/cm³, and the µ" values at 1 GHz, 7.6 GHz (the frequency at which Example 5 shows the maximum µ" value), and 10 GHz were evaluated. Table 4 shows the results. In the range of 1 GHz to 10 GHz, the magnetic material of Example 5 had a higher µ" value than the magnetic material of Comparative Example 4.

**Table 4**

| | µ" | | |
|---|---|---|---|
| | at 1 GHz | at 7.6 GHz | at 10 GHz |
| Example 5 | 1.06 | 3.62 | 0.97 |
| Comparative Example 4 | 0.72 | 0.57 | 0.59 |

### Example 6

A magnetic powder obtained as in Example 2 was classified to prepare an α-Fe-containing rare earth-iron-nitrogen-based magnetic powder having an average particle size of about 17 µm. The average particle size was measured with a laser diffraction particle size distribution analyzer (Japan Laser Corporation, HELOS&RODOS). The magnetic powder was mixed with a resin by the same method as in Examples 1 to 4 to prepare a toroidal molded product (density: 5.58). Using an impedance analyzer, the complex relative permeability of the toroidal molded product in a frequency range of 1 MHz to 1 GHz was evaluated from the inductance determined using a single-turn inductor-type test fixture. Table 5 shows the results. Table 5 also shows the results of Example 2. The frequency dependence of the complex relative permeabilities at 1 MHz to 100 MHz was measured by the above-described method, and FIG. 11 shows the results. The classified magnetic powder of Example 6 had a higher µ' value than the magnetic powder of Example 2.

**Table 5**

| | µ' at 10 MHz | θ | | | | | θ₁/θ₂ |
|---|---|---|---|---|---|---|---|
| | | 2 MHz (θ₂) | 13 MHz | 20 MHz | 30 MHz | 100 MHz (θ₁) | |
| Example 2 | 8.56 | 87.7 | 88.0 | 87.6 | 87.0 | 82.4 | 0.94 |
| Example 6 | 10.22 | 89.5 | 89.0 | 88.5 | 87.9 | 82.6 | 0.92 |

The invention according to the present disclosure may include, for example, the following aspects.
[1] An α-Fe-containing rare earth-iron-nitrogen-based magnetic powder, comprising: a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and an α-Fe-containing region outside the core region, the α-Fe-containing region containing α-Fe and at least one selected from the group consisting of oxides, nitrides, and oxynitrides of the rare earth R.
[2] The α-Fe-containing rare earth-iron-nitrogen-based magnetic powder according to [1], wherein the α-Fe-containing region contains: a nanocrystal comprising at least one selected from the group consisting of oxides, nitrides, and oxynitrides of the rare earth R; and a nanocrystal comprising α-Fe.
[3] The α-Fe-containing rare earth-iron-nitrogen-based magnetic powder according to [1] or [2], wherein the α-Fe-containing region has a thickness that is at least 0.01% but less than 50% of an average particle size of the α-Fe-containing rare earth-iron-nitrogen-based magnetic powder.
[4] The α-Fe-containing rare earth-iron-nitrogen-based magnetic powder according to any one of [1] to [3], wherein the α-Fe-containing region has a thickness of at least 1 nm but not more than 10 µm.
[5] The α-Fe-containing rare earth-iron-nitrogen-based magnetic powder according to any one of [1] to [4], wherein the core region contains a rare earth-iron-nitrogen-based compound, and the α-Fe-containing rare earth-iron-nitrogen-based magnetic powder has an XRD diffraction pattern in which a ratio (I)/(II) of a diffraction peak intensity (I) of a (110) plane of α-Fe to a peak intensity (II) of a strongest line of the rare earth-iron-nitrogen-based compound is at least 0.01 but lower than 10.
[6] The α-Fe-containing rare earth-iron-nitrogen-based magnetic powder according to any one of [1] to [5], wherein a real part of a relative permeability at 10 MHz is at least 6.
[7] The α-Fe-containing rare earth-iron-nitrogen-based magnetic powder according to any one of [1] to [6], wherein the α-Fe-containing rare earth-iron-nitrogen-based magnetic powder has a ratio θ₁/θ₂ of at least 0.8, where θ₁ represents a phase angle at 100 MHz and θ₂ represents a phase angle at 2 MHz.
[8] The α-Fe-containing rare earth-iron-nitrogen-based magnetic powder according to any one of [1] to [7], wherein the α-Fe-containing rare earth-iron-nitrogen-based magnetic powder has a phase angle θ at 13 MHz that is at least 85°.
[9] A magnetic material for magnetic field amplification, comprising the α-Fe-containing rare earth-iron-nitrogen-based magnetic powder according to any one of [1] to [8].
[10] The magnetic material for magnetic field amplification according to [9], further comprising a resin.
[11] The magnetic material for magnetic field amplification according to [9] or [10] for use in wireless power transfer.
[12] A magnetic material for hyper-high frequency absorption, comprising the α-Fe-containing rare earth-iron-nitrogen-based magnetic powder according to any one of [1] to [8].
[13] An α-Fe-containing rare earth-iron-nitrogen-based magnetic powder, comprising: a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and an α-Fe-containing region outside the core region, the α-Fe-containing region having a sea-island structure comprising a sea region and an island region in which the island region has a higher atomic concentration (%) of Fe, a lower atomic concentration (%) of the rare earth R, and a lower atomic concentration (%) of O than the sea region.
[14] A method of producing an α-Fe-containing rare earth-iron-nitrogen-based magnetic powder, the method comprising: performing a phosphorus treatment comprising adding an inorganic acid to a slurry containing: a rare earth-iron-nitrogen-based magnetic powder containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; water; and a phosphorus-containing substance, to form a phosphorus compound coating portion on the rare earth-iron-nitrogen-based magnetic powder, thereby obtaining a rare earth-iron-nitrogen-based magnetic powder having the phosphorus compound coating portion, and performing an oxidation comprising heat-treating the rare earth-iron-nitrogen-based magnetic powder having the phosphorus compound coating portion at a temperature of at least 350°C but not higher than 600°C in an oxygen-containing atmosphere.
[15] The method of producing an α-Fe-containing rare earth-iron-nitrogen-based magnetic powder according to [14], wherein, in the phosphorus treatment, the inorganic acid is added to adjust a pH of the slurry to at least 1 but not higher than 4.5.

### INDUSTRIAL APPLICABILITY

According to the present disclosure, an α-Fe-containing rare earth-iron-nitrogen-based magnetic powder having good magnetic field amplification characteristics and hyper-high frequency absorption characteristics can be provided. The magnetic powder is suitable as a magnetic material for magnetic field amplification or a magnetic material for hyper-high frequency absorption. The magnetic material for magnetic field amplification or magnetic material for hyper-high frequency absorption may be used as materials for transformers, heads, inductors, reactors, cores (magnetic cores), and yokes used in a high or hyper-high frequency range, which are mainly used in power equipment or information and communication equipment, or for high or hyper-high frequency transmitting/receiving elements and antennas for RFID tags, wireless power transfer, etc.; magnetic materials for microwave elements, magnetostrictive elements, magnetoacoustic elements, magnetic recording elements, and other elements for magnetic field-based sensors such as hall elements, magnetic sensors, current sensors, rotation sensors, and electronic compasses; magnetic materials for reducing disturbances caused by unwanted electromagnetic wave interference such as electromagnetic noise absorbing materials, electromagnetic wave absorbing materials, and magnetic shielding materials; and magnetic materials for removing noise from signals in a high or hyper-high frequency range such as denoising inductor element materials (e.g., inductors) or noise filtering materials, etc.

## Claims

1. An α-Fe-containing rare earth-iron-nitrogen-based magnetic powder, comprising:
a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and
an α-Fe-containing region outside the core region, the α-Fe-containing region containing α-Fe and at least one selected from the group consisting of oxides, nitrides, and oxynitrides of the rare earth R.

2. The α-Fe-containing rare earth-iron-nitrogen-based magnetic powder according to claim 1,
wherein the α-Fe-containing region contains:
a nanocrystal comprising at least one selected from the group consisting of oxides, nitrides, and oxynitrides of the rare earth R; and
a nanocrystal comprising α-Fe.

3. The α-Fe-containing rare earth-iron-nitrogen-based magnetic powder according to claim 1 or 2,
wherein the α-Fe-containing region has a thickness that is at least 0.01% but less than 50% of an average particle size of the α-Fe-containing rare earth-iron-nitrogen-based magnetic powder.

4. The α-Fe-containing rare earth-iron-nitrogen-based magnetic powder according to any one of claims 1 to 3,
wherein the α-Fe-containing region has a thickness of at least 1 nm but not more than 10 µm.

5. The α-Fe-containing rare earth-iron-nitrogen-based magnetic powder according to any one of claims 1 to 4,
wherein the core region contains a rare earth-iron-nitrogen-based compound, and
the α-Fe-containing rare earth-iron-nitrogen-based magnetic powder has an XRD diffraction pattern in which a ratio (I)/(II) of a diffraction peak intensity (I) of a (110) plane of α-Fe to a peak intensity (II) of a strongest line of the rare earth-iron-nitrogen-based compound is at least 0.01 but lower than 10.

6. The α-Fe-containing rare earth-iron-nitrogen-based magnetic powder according to any one of claims 1 to 5,
wherein a real part of a relative permeability at 10 MHz is at least 6.

7. The α-Fe-containing rare earth-iron-nitrogen-based magnetic powder according to any one of claims 1 to 6,
wherein the α-Fe-containing rare earth-iron-nitrogen-based magnetic powder has a ratio θ₁/θ₂ of at least 0.8, where θ₁ represents a phase angle at 100 MHz and θ₂ represents a phase angle at 2 MHz.

8. The α-Fe-containing rare earth-iron-nitrogen-based magnetic powder according to any one of claims 1 to 7,
wherein the α-Fe-containing rare earth-iron-nitrogen-based magnetic powder has a phase angle θ at 13 MHz that is at least 85°.

9. A magnetic material for magnetic field amplification, comprising the α-Fe-containing rare earth-iron-nitrogen-based magnetic powder according to any one of claims 1 to 8.

10. The magnetic material for magnetic field amplification according to claim 9, further comprising a resin.

11. The magnetic material for magnetic field amplification according to claim 9 or 10 for use in wireless power transfer.

12. A magnetic material for hyper-high frequency absorption, comprising the α-Fe-containing rare earth-iron-nitrogen-based magnetic powder according to any one of claims 1 to 8.

13. An α-Fe-containing rare earth-iron-nitrogen-based magnetic powder, comprising:
a core region containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; and
an α-Fe-containing region outside the core region, the α-Fe-containing region having a sea-island structure comprising a sea region and an island region in which the island region has a higher atomic concentration (%) of Fe, a lower atomic concentration (%) of the rare earth R, and a lower atomic concentration (%) of O than the sea region.

14. A method of producing an α-Fe-containing rare earth-iron-nitrogen-based magnetic powder, the method comprising:
performing a phosphorus treatment comprising adding an inorganic acid to a slurry containing: a rare earth-iron-nitrogen-based magnetic powder containing a rare earth R, Fe, and N, where R represents at least one selected from the group consisting of Y, Ce, Pr, Nd, Gd, Tb, Dy, Ho, Er, Tm, Lu, and Sm, and when R contains Sm, Sm constitutes less than 50 atm% of a total R content; water; and a phosphorus-containing substance, to form a phosphorus compound coating portion on the rare earth-iron-nitrogen-based magnetic powder, thereby obtaining a rare earth-iron-nitrogen-based magnetic powder having the phosphorus compound coating portion, and
performing an oxidation comprising heat-treating the rare earth-iron-nitrogen-based magnetic powder having the phosphorus compound coating portion at a temperature of at least 350°C but not higher than 600°C in an oxygen-containing atmosphere.

15. The method of producing an α-Fe-containing rare earth-iron-nitrogen-based magnetic powder according to claim 14,
wherein, in the phosphorus treatment, the inorganic acid is added to adjust a pH of the slurry to at least 1 but not higher than 4.5.
